# EUROPEAN PATENT APPLICATION

(11) **EP 4 715 800 A2**
(43) Date of publication of application: **25.03.2026**
(21) Application number: 26157342.2
(22) Date of filing: 09.07.2024
(51) Int. Cl.: G09G 5/12

(54) **ELECTRONIC DEVICE AND SCREEN CONTROL METHOD USING INPUT DEVICE**

(30) Priority: 26.07.2023 KR 20230097564; 29.08.2023 KR 20230113534
(62) Divisional of application: 24742813.9
(71) Applicant: Samsung Electronics Co., Ltd., Suwon-si, Gyeonggi-do 16677 (KR)
(72) Inventor: CHOI, Gwangho, 16677 Suwon-si (KR); KIM, Jongah, 16677 Suwon-si (KR); PARK, Jeongmin, 16677 Suwon-si (KR); YOON, Heewoong, 16677 Suwon-si (KR); LEE, Kihyuk, 16677 Suwon-si (KR); LEE, Donghan, 16677 Suwon-si (KR)
(74) Representative: HGF

(57) **Abstract**

According to various embodiments of the disclosure, an electronic device may include a communication circuit, a display, and a processor operatively connected to the communication circuit and the display. The processor according to an embodiment may obtain first location information related to the location of an input device connected for communication through the communication circuit. The processor according to an embodiment may receive, from a second electronic device connected for communication through the communication circuit, second location information related to the location of the input device obtained by the second electronic device. The processor according to an embodiment may identify the relative location of the second electronic device with respect to the electronic device, based on the obtained first location information related to the location of the input device and the received second location information related to the location of the input device. The processor according to an embodiment may configure an arrangement of the display and the second display of the second electronic device, based on the identified relative location of the second electronic device. Various other embodiments other than those disclosed in this document may be possible.

## Description

### [Technical Field]

Embodiments of the disclosure relates to an electronic device and a method for controlling a screen using an input device.

### [Background Art]

With the development of digital technology, various types of electronic devices such as mobile communication terminals, personal digital assistants (PDAs), electronic notebooks, smartphones, tablet PCs (personal computers), wearable devices, and/or laptop PCs are widely used. In order to support and increase functions of these electronic devices, the hardware and/or software parts of the electronic devices are continuously being developed.

On the other hand, when using one or more electronic devices, various applications may be performed on the one or more devices. For example, a user may connect two electronic devices by wire or wirelessly so that the screen of an application being displayed on the display of one of the electronic devices is displayed on another electronic device connected by wire or wirelessly.

The above information may be presented as related art for the purpose of assisting in understanding the disclosure. No assertion or decision is made as to whether any of the above might be applicable as prior art with regard to the disclosure.

### [Disclosure of Invention]

### [Technical Problem]

When displaying the screen of an application running in the electronic device on the display of a wirelessly connected external electronic device (e.g., in an extended display), it is inconvenient for a user to manually configure (e.g., arrange) the display order in which the screen is displayed. That is, in examples, the user may need to manually configure, the display arrangement of the displayed screens of the connected electronic devices. In addition, when the location of the external electronic device is changed (or moved) with respect to the electronic device, it is inconvenient for the user to manually configure the display order in which the screen is displayed.

### [Solution to Problem]

An electronic device according to an embodiment of the disclosure may provide the ability to configure the display order in which screens are displayed using an input device. For example, the electronic device may obtain first location information related to the location of an input device connected for communication, receive second location information related to the location of the input device from a second electronic device including a display connected for communication, and configure the order of the displays in which screens are displayed according to the location of the second electronic device identified based on the first location information and the second location information.

According to an embodiment of the disclosure, an electronic device may include a communication circuit, a display, and a processor operatively connected to the communication circuit and the display. The processor according to an embodiment may obtain first location information related to the location of an input device connected for communication through the communication circuit. The processor according to an embodiment may receive, from a second electronic device connected for communication through the communication circuit, second location information related to the location of the input device obtained by the second electronic device. The processor according to an embodiment may identify the relative location of the second electronic device with respect to the electronic device, based on the obtained first location information related to the location of the input device and the received second location information related to the location of the input device. The processor according to an embodiment may configure an arrangement of the display and the second display of the second electronic device, based on the identified relative location of the second electronic device.

According to an embodiment of the disclosure, a method of controlling a screen using an input device of an electronic device may include obtaining first location information related to the location of an input device connected for communication through the communication circuit. According to an embodiment, a method of controlling a screen using an input device of an electronic device may include receiving second location information related to the location of the input device obtained by the second electronic device from a second electronic device connected for communication through the communication circuit. According to an embodiment, a method of controlling a screen using an input device of an electronic device may include identifying the relative location of the second electronic device with respect to the electronic device, based on the obtained first location information related to the location of the input device and the received second location information related to the location of the input device. According to an embodiment, a method of controlling a screen using an input device of an electronic device may include configuring an arrangement of the display and the second display of the second electronic device, based on the identified relative location of the second electronic device.

According to an embodiment of the disclosure, a non-transitory computer-readable storage medium (or computer program product) storing one or more programs may be described. One or more programs according to an embodiment, when executed by a processor of an electronic device, may include instructions for obtaining first location information related to the location of an input device connected for communication through a communication circuit. One or more programs according to an embodiment, when executed by a processor of an electronic device, may include instructions for receiving second location information related to the location of the input device obtained by the second electronic device, from a second electronic device connected for communication through the communication circuit. One or more programs according to an embodiment, when executed by a processor of an electronic device, may include instructions for identifying the relative location of the second electronic device with respect to the electronic device, based on the first location information related to the obtained location of the input device and the second location information related to the received location of the input device. One or more programs according to an embodiment, when executed by a processor of an electronic device, may include instructions for configuring an arrangement of the display of the electronic device and the second display of the second electronic device, based on the identified relative location of the second electronic device.

### [Advantageous Effects of Invention]

As the electronic device according to an embodiment of the disclosure configures the order of the displays in which the screen is displayed according to the location of the second electronic device identified based on the first location information related to the location of the input device obtained by the electronic device and the second location information related to the location of the input device obtained by the second electronic device, the inconvenience of the user having to manually configure the display order in which the screen is displayed each time may be solved.

The electronic device according to an embodiment of the disclosure may provide natural continuity between screens to be displayed on the display of the electronic device and the second display of the second electronic device by configuring the display properties of the screen to be displayed on each of the display of the electronic device and the second display of the second electronic device, based on the location of the second electronic device.

### [Brief Description of Drawings]

FIG. 1 is a block diagram illustrating an electronic device in a network environment according to an embodiment of the disclosure.
FIG. 2 is a diagram illustrating a communication connection between a first electronic device, a second electronic device, and an input device, according to an embodiment of the disclosure.
FIG. 3 is a block diagram illustrating a first electronic device according to an embodiment of the disclosure.
FIG. 4 is a block diagram illustrating an input device according to an embodiment of the disclosure.
FIG. 5 is a diagram illustrating a cross-sectional view of an input device according to an embodiment of the disclosure.
FIG. 6A is a diagram illustrating a method of configuring the level of a display of a first electronic device and a second display of a second electronic device, according to an embodiment of the disclosure.
FIG. 6B is a flowchart illustrating a method of controlling a screen by using an input device of a first electronic device, according to an embodiment of the disclosure.
FIG. 7 is a diagram illustrating a method of controlling a screen by using an input device of a first electronic device, according to an embodiment of the disclosure.
FIG. 8 is a diagram illustrating a method of configuring the level of a display of a first electronic device and a second display of a second electronic device, according to an embodiment of the disclosure.
FIG. 9 is a diagram illustrating a method of controlling a screen by using an input device of a first electronic device, according to an embodiment of the disclosure.
FIG. 10 is a diagram illustrating a signal flow between a first electronic device, an input device, and a second electronic device, according to an embodiment of the disclosure.
FIG. 11 is a diagram illustrating a method of identifying the relative location of a second electronic device with respect to a first electronic device, according to an embodiment of the disclosure.
FIG. 12 is a diagram illustrating a method of identifying the relative location of a second electronic device with respect to a first electronic device, according to an embodiment of the disclosure.
FIG. 13 is a diagram illustrating a method of controlling a screen by using an input device of a first electronic device, according to an embodiment of the disclosure.
FIG. 14 is a diagram illustrating signal flow between a first electronic device, an input device, and a second electronic device, according to an embodiment of the disclosure.
FIG. 15 is a diagram illustrating signal flow between a first electronic device, an input device, and a second electronic device, according to an embodiment of the disclosure.
FIG. 16 is a diagram illustrating a method of reconfiguring the level of a display of a first electronic device and a second display of a second electronic device, according to an embodiment of the disclosure.
FIG. 17 is a diagram illustrating signal flow between a first electronic device, an input device, and a second electronic device, according to an embodiment of the disclosure.
FIG. 18 is a diagram illustrating a method of configuring the level of a display of a first electronic device and a second display of a second electronic device, according to an embodiment of the disclosure.
FIG. 19 is a diagram illustrating a method of controlling a screen by using an input device of a first electronic device, according to an embodiment of the disclosure.
FIG. 20 is a diagram illustrating a user interface for the level of a display of a first electronic device and a second display of a second electronic device, and a user interface indicating the relative location of the second electronic device with respect to the first electronic device, according to an embodiment of the disclosure.

### [Mode for the Invention]

Hereinafter, embodiments of the disclosure will be described in detail with reference to the drawings so that those skilled in the art to which the disclosure pertains can easily implement the disclosure. However, the present disclosure may be implemented in various forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

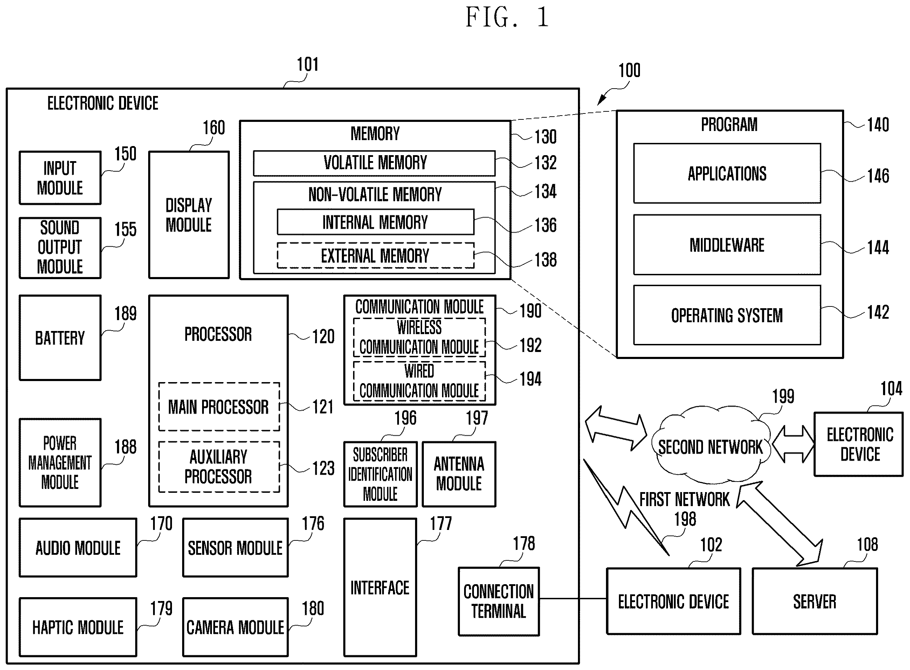

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmwave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

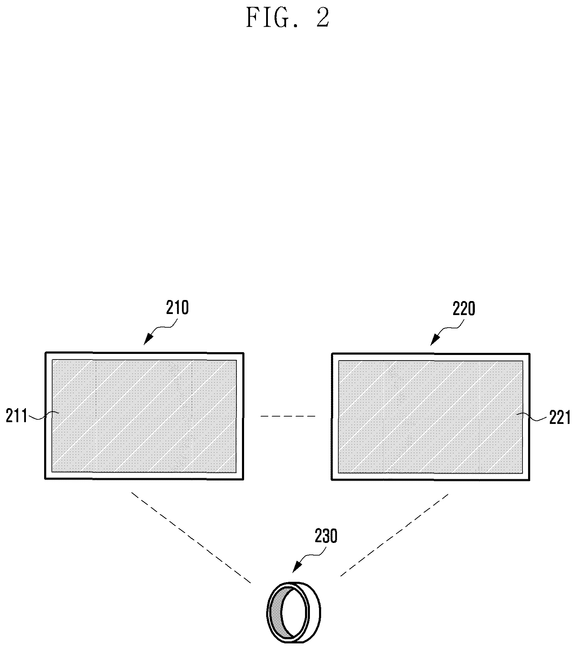

FIG. 2 is a diagram illustrating a communication connection between a first electronic device 210, a second electronic device 220, and an input device 230, according to an embodiment of the disclosure.

Referring to FIG. 2, the first electronic device 210, the second electronic device 220, and the input device 230 may be connected to each other through designated communication. For example, the designated communication may include short-range communication (e.g., Bluetooth, Bluetooth low energy (BLE), Wi-Fi, Wi-Fi direct, Wi-Fi aware, or ultra-wideband (UWB)).

In an embodiment, the first electronic device 210 and the second electronic device 220 may be devices including (comprising) displays 211 and 221.

In an embodiment, the input device 230 may include a smart ring 230 that may be worn on a part of the body (e.g., a finger). However, it will be appreciated that the disclosure is not intended to be limited thereto, and the input device 230 may be any type of input device, and in examples, may include an electronic pen.

In an embodiment, when there is no history of communication connection of the first electronic device 210 with (e.g., between) the second electronic device 220 and/or the input device 230, the first electronic device 210 may perform an operation of configuring an initial communication connection with the second electronic device 220 and/or the input device 230. For example, the input device 230 approaching the first electronic device 210 may broadcast a signal including information (e.g., identification information of the second electronic device 220 (e.g., name of the second electronic device 220), type of the second electronic device 220, information related to the second display 221 (e.g., resolution information and/or scanning rate), and/or MAC address information) on the second electronic device 220 and/or information (e.g., identification information of the input device 230 (e.g., name of the input device 230, type of the input device 230, and/or MAC address information) on the input device 230. The first electronic device 210 may receive a signal broadcast by the second electronic device 220 and/or the input device 230 by scanning for a predetermined time (or at a predetermined time interval). The first electronic device 210 may be connected to the second electronic device 220 and/or the input device 230 for communication by transmitting a response signal including information (e.g., identification information of the first electronic device 210 (e.g., name of the first electronic device 210), type of the first electronic device 210, information related to the display 211 (e.g., resolution information and/or scanning rate), and/or MAC address information) on the first electronic device 210 in response to receiving a signal broadcast by the second electronic device 220 and/or the input device 230.

In an embodiment, when there is a history of communication connection (e.g., of the first electronic device 210) with the second electronic device 220 and/or input device 230, the first electronic device 210 may compare information on the second electronic device 220 and/or the input device 230 included in the signal broadcast by the second electronic device 220 and/or the input device 230 with information on the second electronic device 220 and/or the input device 230 stored in a memory, and establish a communication connection with the second electronic device 220 and/or the input device 230 based on at least some pieces of matched information.

In an embodiment, the input device 230 may include (e.g., comprise) a light-emitting unit (not illustrated). In an embodiment, the light-emitting unit may emit an optical signal of a designated pattern. The optical signal of the designated pattern may refer to an optical signal of a specific pattern, a specific period, and/or a specific length. However, the disclosure is not limited thereto.

In an embodiment, the first electronic device 210 may receive an optical signal of a designated pattern emitted from the light-emitting unit of the input device 230. The first electronic device 210 may obtain first location information of the input device 230, based on an optical signal of a designated pattern emitted from the light-emitting unit of the input device 230. For example, the first electronic device 210 may obtain first location information related to the location of the input device 230, based on a timeline receiving an optical signal of a designated pattern from the input device 230. In examples, a timeline may refer to time information (e.g., one or more ordered time points, a time period), relating to, or corresponding to, a received signal or information from the input device (e.g., relevant to a location of the input device). In examples, a timeline may refer to time information associated with receiving the optical signal from the input device (e.g. with related location information). That is, in some examples, the timeline may refer to time information on a time point (one or more ordered time points, or a time period) at which (or when) the optical signal (comprising the location information) is received. The first electronic device 210 may obtain first location information based on the time information corresponding to the optical signal received from the input device 230.

In an embodiment, the second electronic device 220 may receive an optical signal of a designated pattern emitted from the light-emitting unit of the input device 230. The second electronic device 220 may obtain second location information of the input device 230, based on an optical signal of a designated pattern emitted from the light-emitting unit of the input device 230. For example, the second electronic device 220 may obtain second location information related to the location of the input device 230, based on a timeline receiving an optical signal of a designated pattern from the input device 230. For example, the second electronic device 220 may obtain second location information based on the time information of when the optical signal is received from the input device 230. The second electronic device 220 may transmit the obtained second location information related to the location of the input device 230 to the first electronic device 210.

In an embodiment, the first electronic device 210 may compare the first location information of the input device 230 with the second location information of the input device 230 received from the second electronic device 220 in a timeline. The first electronic device 210 may estimate the location and/or movement (e.g., movement direction) of the input device 230 to identify the relative location of the second electronic device 220 with respect to the first electronic device 210, based on the result of comparing the first location information of the input device 230 obtained by the first electronic device 210 with the second location information of the input device 230 received from the second electronic device 220 in a timeline. For example, comparing the first location information with the second location may be based on time information associated with the first location information (e.g., a time of receiving information, such as an optical signal, relevant to the first location information at the first electronic device 210), and time information associated with the second location information (e.g., a time of receiving information, such as an optical signal, relevant to the second location information at the second electronic device 220 ). The first electronic device 210 may configure the levels (e.g. arrangement) of the display 211 of the first electronic device 210 and the second display 221 of the second electronic device 220, based on the identified relative location of the second electronic device 220.

In examples relevant to the present disclosure herein, configuration of levels of display 211 and second display 221 may mean configuring (or determination) of the arrangement, alignment, or positioning (e.g., a display arrangement, a display configuration, relative display levels) of the display 211 and second display 211 based on the identified relative location of the second electronic device 220. By way of example, the configuring of the arrangement (levels) of the display may refer to configuring, or setting, the arrangement of the displays (e.g., in terms of setting a relative order of the displays, a relative height and/or position of the displays). In examples, this may be relevant to the devices being used as an extended screen, for example, where an application executing in one device may also be displayed at least partially on the display screen of a connected device. In examples discussed herein, the display devices may be configured, or arranged, based on the identified relative location to provide a continuity across the (extended) display.

For example, the first electronic device 210 may configure (e.g., may additionally configure) display properties of the first screen to be displayed on the display 211 and display properties of the second screen to be displayed on the second display 221, based on the configured display 211 of the first electronic device 210 and the second display 221 of the second electronic device 220. For example, the display properties may include a display resolution, a scanning rate, a brightness, and/or a size of at least one object constituting the screen. However, the disclosure is not limited thereto. The first electronic device 210 may display a first screen on the display 211 based on the configured first display properties, and display a second screen on the second display 221 of the second electronic device 220 based on the configured second display properties.

In relation to the above description, various embodiments will be described below.

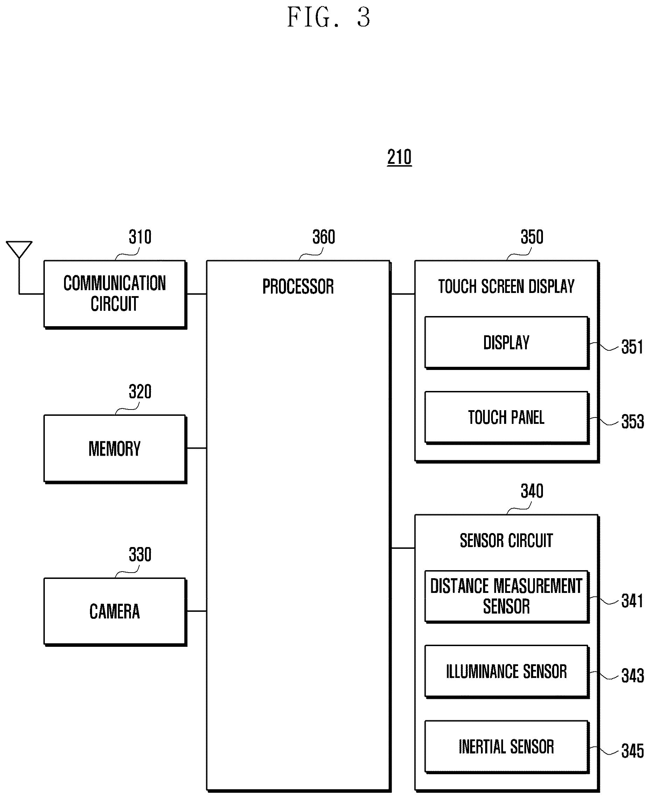

FIG. 3 is a block diagram illustrating a first electronic device 210 according to an embodiment of the disclosure.

Referring to FIG. 3, the first electronic device 210 (e.g., the electronic device 101 of FIG. 1 and the first electronic device 210 of FIG. 2) may include a communication circuit 310 (e.g., the communication module 190 of FIG. 1), a memory 320 (e.g., the memory 130 of FIG. 1), and a camera 330 (e.g., the camera module 180 of FIG. 1), a sensor circuit 340 (e.g., the sensor module 176 of FIG. 1), a touch screen display 350 (e.g., the display module 160 of FIG. 1), and/or a processor 360 (e.g., the processor 120 of FIG. 1).

According to an embodiment of the disclosure, the communication circuit 310 (e.g., the communication module 190 of FIG. 1) may control a communication connection between the first electronic device 210 and at least one external electronic device (e.g., the electronic devices 102 and 104 of FIG. 1, the second electronic device 220 of FIG. 2, the input device 230, and/or a server (e.g., the server 108 of FIG. 1)) under the control of the processor 360.

According to an embodiment of the disclosure, the memory 320 (e.g., the memory 130 of FIG. 1) may perform a function of storing a program (e.g., the program 140 of FIG. 1), operating system (OS) (e.g., the operating system 142 of FIG. 1) for processing and controlling the processor 360 of the first electronic device 210, various applications, and/or input/output data, and store a program for controlling the overall operation of the first electronic device 210. The memory 320 may store various configuration information necessary for processing a function related to various embodiments of the disclosure in the first electronic device 210.

In an embodiment, the memory 320 may store instructions for obtaining first location information related to the location of the input device 230 through the camera 330, the sensor circuit 340, and/or the UWB communication. The memory 320 may store instructions for identifying the relative location of the second electronic device 220 with respect to the first electronic device 210, based on the first location information related to the location of the input device 230 and the second location information related to the location of the input device 230 received from the second electronic device 230. The memory 320 may store instructions for configuring the levels of the display 351 and the second display 221, based on the identified relative location of the second electronic device 220. The memory 320 may store instructions for configuring display properties of a first screen to be displayed on the display 351 and display properties of a second screen to be displayed on the second display 221, based on the configured levels of the display 351 and the second display 221.

In an embodiment, the memory 320 may store instructions for obtaining information related to the movement of the first electronic device 210 through the sensor circuit 340.

The memory 320 may store instructions for executing a mode for reconfiguring the levels of the display 351 and the second display 221 of the second electronic device 220, based on detecting a specific gesture of the input device 230.

According to an embodiment of the disclosure, the camera 330 (e.g., the camera module 180 of FIG. 1) may deliver the collected images to the display 351 as a preview screen so that the user may identify the images projected through the camera 330. In response to an input requesting capture, the camera 330 may generate image data by capturing images collected at the time when the input requesting capture occurs. In an embodiment, one or more cameras 330 may be provided.

In an embodiment, the camera 330 may track an optical signal output from the light-emitting unit of the input device 230.

According to an embodiment of the disclosure, the sensor circuit 340 (e.g., the sensor module 176 of FIG. 1) may measure a physical quantity or detect a state of the first electronic device 210 to generate an electrical signal or data value corresponding thereto.

In an embodiment, the sensor circuit 340 may include a distance measurement sensor 341, an illuminance sensor 343, and/or an inertial sensor 345.

In an embodiment, the distance measurement sensor 341 may include a time of flight (ToF) sensor. The ToF sensor may include a light-emitting unit (e.g., an emitter) for irradiating a laser light source to the outside and a light-receiving unit (e.g., a receiver) detecting light reflected and returned by an external object after irradiation from the light-emitting unit. For example, the ToF sensor may obtain (or calculate) distance information to the external object and/or depth information by using the time difference (or phase difference) that the light irradiated from the light-emitting unit is reflected by the external object and received by the light-receiving unit (e.g., receiver).

In an embodiment, the illuminance sensor 343 may receive an optical signal output from the light-emitting unit of the input device 230.

In an embodiment, the inertial sensor 345 may include a motion sensor and/or a 9-axis sensor (e.g., a geomagnetic sensor, an acceleration sensor, and/or a gyro sensor). For example, the acceleration sensor may measure acceleration acting on three axes (e.g., x-axis, y-axis, and z-axis), and measure, estimate, and/or sense a force applied to the first electronic device 210 by using the measured acceleration. The gyro sensor may be located inside the first electronic device 210 and may be configured to measure rotation related to the first electronic device 210. The gyro sensor may be configured to measure rotation about three axes (e.g., x-axis, y-axis, and z-axis). The geomagnetic sensor may measure a geomagnetic vector for three axes (e.g., x-axis, y-axis, and z-axis), and measure the azimuth of the first electronic device 210 by using the size and direction of the geomagnetic vector. The acceleration sensor, gyro sensor, and geomagnetic sensor may be integrated and implemented as a single sensor (e.g., a 9-axis sensor). The sensor circuit 340 (e.g., a motion sensor, an acceleration sensor, a geomagnetic sensor, and/or a gyro sensor) may obtain information (e.g., movement speed information, movement direction information, movement distance information, and/or inclination information) related to movement of the first electronic device 210. The sensor circuit 340 may deliver the obtained information related to the movement of the first electronic device 210 to the processor 360.

According to an embodiment of the disclosure, the touch screen display 350 (e.g., the display module 160 of FIG. 1) may be integrally configured to include the display 351 (e.g., the display 211 of FIG. 2) and the touch panel 353.

In an embodiment, the touch screen display 350 may display an image under the control of the processor 360, and may be implemented as one of a liquid crystal display (LCD), a light-emitting diode (LED) display, a micro LED (µLED) display, an organic light-emitting diode (OLED) display, an active matrix organic light-emitting diode (AMOLED) display, a micro electro-mechanical system (MEMS) display, an electronic paper display, a flexible display, a foldable display, or a rollable display. However, the disclosure is not limited thereto.

In an embodiment, the touch panel 353 may be a composite touch panel configured to include a hand touch panel for sensing a hand gesture and a pen touch panel for sensing a pen gesture.

In an embodiment, the touch screen display 350 may display a first screen including at least one object under the control of the processor 360. The touch screen display 350 may display the first screen including at least one object based on configured display properties under the control of the processor 360. The touch screen display 350 may display an indicator indicating the level of the display 351 under the control of the processor 360. The touch screen display 350 may display an indicator indicating a relative location of the second electronic device 220 with respect to the first electronic device 210 under the control of the processor 360.

According to an embodiment of the disclosure, the processor 360 may include, for example, a microcontroller unit (MCU), and control a plurality of hardware components connected to the processor 360 by driving an operating system (OS) or an embedded software program. The processor 360 may control a plurality of hardware components according to instructions (e.g., the program 140 of FIG. 1) stored in the memory 320.

In an embodiment, the processor 360 may obtain first location information related to the location of the connected input device 230 for communication. For example, the processor 360 may receive an optical signal of a designated pattern that emits light from the light-emitting unit of the input device 230 through (e.g., at) the receiver of the distance measurement sensor 341. The processor 360 may obtain first location information related to the location of the input device 230, based on receiving an optical signal of a designated pattern emitted from the light-emitting unit of the input device 230 through the receiver of the distance measurement sensor 341. For example, the processor 360 may obtain first location information related to the location of the input device 230, based on a timeline that receives an optical signal of a designated pattern from the input device 230. For example, the processor 360 may obtain first location information related to the location of the input device 230, based on time information at which the optical signal of the designated pattern is received (e.g., detected) at the receiver of the distance measurement sensor 341. In an example, the processor 360 may obtain first location information related to the location of the input device 230 through the camera 330. For example, the processor 360 may track an optical signal of a designated pattern emitted from the light-emitting unit of the input device 230 by using the camera 330, and, based on this, may obtain first location information (e.g., information related to the movement of the input device 230 (e.g., movement in a specific direction)).

For example, the processor 360 may obtain first location information related to the location of the input device 230 through UWB communication. For example, UWB communication may include communication to measure the distance (or location) between the first electronic device 210 and the input device 230 in a two-way ranging (TWR) method between the first electronic device 210 and the input device 230. For example, the processor 360 may obtain first location information related to the location of the input device 230, based on information related to the movement of the input device 230 received from the input device 230.

In an embodiment, the processor 360 may receive second location information related to the location of the input device 230 obtained by the second electronic device 220 from the connected second electronic device 220 for communication. The processor 360 may identify a relative location of the second electronic device 220 with respect to the first electronic device 210, based on the first location information related to the location of the input device 230 and the second location information related to the location of the input device 230. For example, the processor 360 may compare the first location information of the input device 230 obtained by the first electronic device 210 with the second location information of the input device 230 received from the second electronic device 220 in a timeline. The processor 360 may estimate (e.g., determine) the location and/or movement (e.g., movement direction) of the input device 230, based on a result of comparing the first location information of the input device 230 obtained by the first electronic device 210 and the second location information of the input device 230 received from the second electronic device 220 in a timeline. For example, the processor 360 may compare the first location information and the second location information in respect of the time information (e.g., a timeline of both information) of the received first location information and the second location information at the devices. The processor 360 may identify the relative location of the second electronic device 220 with respect to the first electronic device 210, based on the estimated movement direction according to the movement of the input device 230. The processor 360 may configure the levels of the display 351 of the first electronic device 210 and the second display (e.g., the second display 221 of FIG. 2) of the second electronic device 220, based on the identified relative location of the second electronic device 220.

In an embodiment, the processor 360 may identify distance information to the second electronic device 220 and/or depth information, based on the relative location of the second electronic device 220. The processor 360 may configure first display properties on the first screen to be displayed on the display 351 based on distance information to the second electronic device 220 and/or depth information, and configure second display properties on the second screen to be displayed on the second display 221 of the second electronic device 220. For example, the display properties may include a display resolution, a scanning rate, a brightness, and/or a size of at least one object constituting the screen. However, the disclosure is not limited thereto. The processor 360 may display a first screen on the display 351 based on the first display properties, and display the second screen on the second display 221 of the second electronic device 220 based on the second display properties.

In various embodiments, although not illustrated, the second electronic device 220 illustrated in FIG. 2 may include the same components as those of the above-described first electronic device 210. For example, the second electronic device 220 may include a communication circuit (e.g., the communication module 190 of FIG. 1), a memory (e.g., the memory 130 of FIG. 1), a camera (e.g., the camera module 180 of FIG. 1), a sensor circuit (e.g., the sensor module 176 of FIG. 1), a touch screen display (e.g., the display module 160 of FIG. 1 and the second display 221 of FIG. 2), and/or a processor (e.g., the processor 120 of FIG. 1).

In an embodiment, the second electronic device 220 may obtain second location information related to the location of the connected input device 230 for communication. For example, the second electronic device 220 may receive an optical signal of a designated pattern emitted from the light-emitting unit of the input device 230 through a receiver of a sensor circuit (e.g., a distance measurement sensor). The second electronic device 220 may obtain second location information related to the location of the input device 230, based on receiving an optical signal of a designated pattern emitted from the light-emitting unit of the input device 230 through a receiver of a sensor circuit (e.g., a distance measurement sensor). The second electronic device 220 may transmit the obtained second location information related to the location of the input device 230 to the connected first electronic device 210 for communication. The second screen based on the second display properties configured by the first electronic device 210 may be displayed on the display 221 of the second electronic device 220.

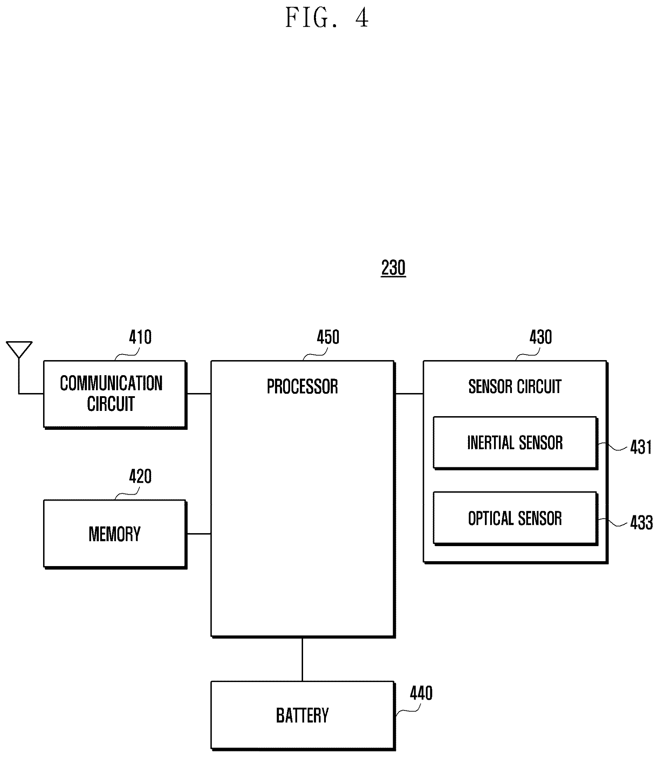

FIG. 4 is a block diagram illustrating an input device 230 according to an embodiment of the disclosure.

Referring to FIG. 4, the input device 230 may include a communication circuit 410 (e.g., the communication module 190 of FIG. 1), a memory 420 (e.g., the memory 130 of FIG. 1), a sensor circuit 430 (e.g., the sensor module 176 of FIG. 1), a battery 440 (e.g., the battery 189 of FIG. 1), and/or a processor 450 (e.g., the processor 120 of FIG. 1).

According to an embodiment of the disclosure, the communication circuit 410 (e.g., the communication module 190 of FIG. 1) may control a communication connection between the input device 230 and the first electronic device 210 and/or the second electronic device 220 under the control of the processor 450.

According to an embodiment of the disclosure, the memory 420 (e.g., the memory 130 of FIG. 1) may perform a function of storing a program (e.g., the program 140 of FIG. 1) for processing and controlling of the processor 450 of the input device 230, an operating system (OS) (e.g., the operating system 142 of FIG. 1), various applications, and/or input/output data, and may store a program for controlling the overall operation of the input device 230. The memory 420 may store various configuration information required when the input device 230 processes functions related to various embodiments of the disclosure.

In an embodiment, the memory 420 may store instructions for emitting an optical signal of a designated pattern through the light-emitting unit of an optical sensor 433.

In an embodiment, the memory 420 may store instructions for obtaining information related to the movement of the input device 230 through the sensor circuit 430.

According to an embodiment of the disclosure, the sensor circuit 430 (e.g., the sensor module 176 of FIG. 1) may measure a physical quantity or detect the state of the input device 230 to generate an electrical signal or data values corresponding thereto.

In an embodiment, the sensor circuit 430 may include an inertial sensor 431 and/or an optical sensor 433.

In an embodiment, the inertial sensor 431 may include a motion sensor and/or a 9-axis sensor (e.g., a geomagnetic sensor, an acceleration sensor, and/or a gyro sensor). For example, the acceleration sensor may measure acceleration acting on three axes (e.g., x-axis, y-axis, and z-axis), and measure, estimate, and/or sense a force applied to the input device 230 by using the measured acceleration. The gyro sensor may be configured to measure rotation related to the input device 230. The gyro sensor may be configured to measure rotation about three axes (e.g., x-axis, y-axis, and z-axis). The geomagnetic sensor may measure a geomagnetic vector for three axes (e.g., x-axis, y-axis, and z-axis), and measure the azimuth of the input device 230 by using the size and direction of the geomagnetic vector. The acceleration sensor, gyro sensor, and geomagnetic sensor may be integrated and implemented as a single sensor (e.g., a 9-axis sensor). The sensor circuit 340 (e.g., a motion sensor, an acceleration sensor, a geomagnetic sensor, and/or a gyro sensor) may obtain information (e.g., movement speed information, movement direction information, movement distance information, and/or inclination information) related to movement of the input device 230. The sensor circuit 340 may deliver the obtained information related to the movement of the input device 230 to the processor 360.

In an embodiment, the optical sensor 433 may include a light-emitting unit and a light receiver. For example, the light-emitting unit of the optical sensor 433 may be implemented to output light of various wavelength bands and/or various intensities, respectively. For example, the light-emitting unit may include multiple light-emitting devices (e.g., LEDs) capable of outputting at least one of red light, green light, blue light, and/or infrared (IR) light. For example, the light-emitting unit may include at least one of a light emitting diode (LED), an organic light emitting diode (OLED), a semiconductor laser diode (LD), a solid laser, or an infrared (IR) diode. The light receiver of the optical sensor 433 may include various elements capable of sensing an optical signal, converting the optical signal into an electrical signal, and outputting the electrical signal. For example, the light receiver may include at least one of a photodiode (PD), an avalanche photodiode (APD), or a phototransistor or an image sensor.

According to an embodiment of the disclosure, the battery 440 (e.g., the battery 189 of FIG. 1) may supply power to at least one component of the input device 230. According to an embodiment, the battery 440 may include, for example, a non-rechargeable primary battery, a rechargeable secondary battery, or a fuel cell.

According to an embodiment of the disclosure, the processor 450 may include, for example, a microcontroller unit (MCU), and may control a plurality of hardware components connected to the processor 450 by driving an operating system (OS) or an embedded software program. For example, the processor 450 may control a plurality of hardware components according to instructions (e.g., the program 140 of FIG. 1) stored in the memory 420.

In an embodiment, the processor 450 may emit an optical signal of a designated pattern through the light-emitting unit of the optical sensor 433. For example, the optical signal of the designated pattern may refer to an optical signal of a specific pattern, a specific period, and/or a specific length. However, the disclosure is not limited thereto. The processor 450 may obtain information related to the movement of the input device 230 through the sensor circuit 430 and transmit the information to the first electronic device 210 and/or the second electronic device 220.

The electronic device 210 according to an embodiment of the disclosure may include a communication circuit 310, a display 351, and a processor 360 operatively connected to the communication circuit 310 and the display 351. The processor 360 according to an embodiment may obtain first location information related to the location of an input device 230 connected for communication through the communication circuit 310. The processor 360 according to an embodiment may receive, from a second electronic device 220 connected for communication through the communication circuit 310, second location information related to the location of the input device 230 obtained by the second electronic device 220. The processor 360 according to an embodiment may identify the relative location of the second electronic device 220 with respect to the electronic device 210, based on the obtained first location information related to the location of the input device 230 and the second location information related to the location of the input device 230 received from the second electronic device 220. The processor 360 according to an embodiment may configure an arrangement of the display 351 and the second display 221 of the second electronic device 220, based on the identified relative location of the second electronic device 220.

The electronic device 210 according to an embodiment may include a distance measurement sensor 341. The processor 360 according to an embodiment may receive an optical signal emitted in a designated pattern from the light-emitting unit of the input device 230 through the receiver of the distance measurement sensor 341. The processor 360 according to an embodiment may obtain the first location information related to the location of the input device 230, based on at least one time information for time of receiving an optical signal of a designated pattern from the input device 230.

The processor 360 according to an embodiment may receive information related to the movement of the input device 230 from the input device 230. The processor 360 according to an embodiment may obtain the first location information related to the location of the input device 230, based on at least one of the at least one time information for time of receiving an optical signal of a designated pattern from the input device 230 and at least one time information for time of receiving the information related to the movement of the input device 230.

The electronic device 210 according to an embodiment may include a memory 320. The processor 360 according to an embodiment may store, in the memory 320, the at least one time information for time of receiving an optical signal of a designated pattern from the input device 230 and the at least one time information for time of information related to the movement of the input device 230. For example, the processor 360 may store, in the memory 320, time information relevant to the received optical signal (time line). In an example, the processor 360 may store information related to the movement of the input device 230 for each timeline (e.g., relevant to the time information for a received optical signal).

The processor 360 according to an embodiment may identify the shape of the optical signal received through the receiver of the distance measurement sensor 341. The processor 360 according to an embodiment may obtain the first location information related to the location of the input device 230, based on the shape of the received optical signal (e.g., relevant to time information, which may comprise one or more time points, for a received optical signal).

The processor 360 according to an embodiment may compare at least one time information for time of obtaining the first location information related to the location of the input device 230 with at least one time information for time of receiving the second location information. The processor 360 according to an embodiment may estimate at least one of the location and movement of the input device 230, based on the comparison results. The processor 360 according to an embodiment may identify the relative location of the second electronic device 220 with respect to the electronic device 210, based on at least one of the estimated location and movement of the input device 230.

The processor 360 according to an embodiment may identify at least one of information on the distance to the second electronic device 220 and depth information, based on the identified relative location of the second electronic device 220. The processor 360 according to an embodiment may configure first display properties on the first screen to be displayed on the display 351 and configure second display properties on the second screen to be displayed on the second display 221 of the second electronic device 220, based on at least one of information on the distance to the second electronic device 220 and depth information. The processor 360 according to an embodiment may display the first screen on the display 351 based on the configured first display properties, and display the second screen on the second display 221 of the second electronic device 220 based on the configured second display properties.

The processor 360 according to an embodiment may receive information related to the movement of the second electronic device 220 from the second electronic device 220. The processor 360 according to an embodiment may receive an optical signal emitted in a second designated pattern from the light-emitting unit of the input device 230 through the receiving unit of the distance measurement sensor 341. The processor 360 according to an embodiment may obtain third location information related to the location of the input device 230, based on the received optical signal of the second designated pattern. The processor 360 according to an embodiment may receive, from the second electronic device 220, fourth location information related to the location of the input device 230 obtained by the second electronic device 220. The processor 360 according to an embodiment may identify the second relative location of the second electronic device 220 with respect to the electronic device 210, based on the third location information and the fourth location information related to the location of the input device 230. The processor 360 according to an embodiment may reconfigure the arrangement of the display 351 of the electronic device 210 and the second display 221 of the second electronic device 220, based on the second relative location of the second electronic device 220.

The processor 360 according to an embodiment may receive information related to a movement of the input device 230 from the input device 230. The processor 360 according to an embodiment may detect a specific gesture based on the received information related to the movement of the input device 230. The processor 360 according to an embodiment may identify a mode for reconfiguring the arrangement of the display 351 and the second display 221 of the second electronic device 220 based on detecting the specific gesture. For example, based on the received information related to the movement of the input device 230, the processor 360 may identify (or determine) that the specific gesture has been performed, the specific gesture being a gesture that corresponds to (e.g., to initiate, or enter) a mode for reconfiguring display levels (e.g., display arrangement) of the display 351 and second display 221.

The processor 360 according to an embodiment may display an indicator indicating the relative location (e.g., the identified relative location) of the second electronic device 220 with respect to the electronic device 210 on at least a partial area of the display 351.

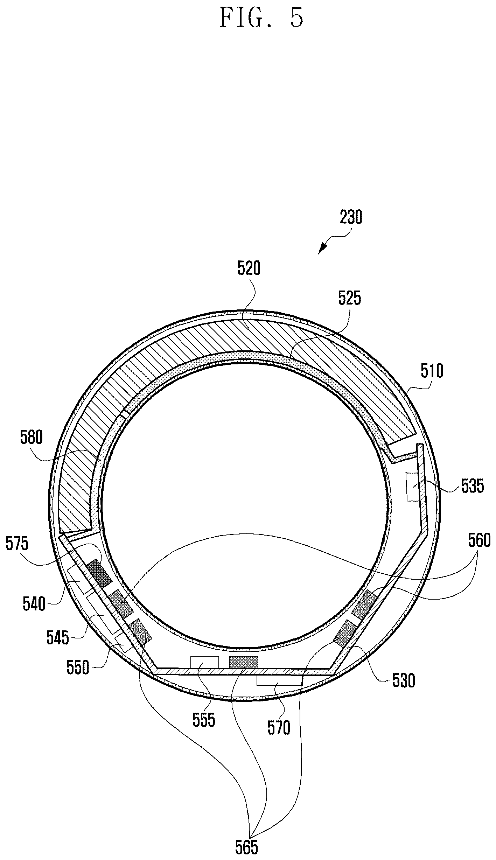

FIG. 5 is a diagram illustrating a cross-sectional view of an input device 230 according to an embodiment of the disclosure.

Referring to FIG. 5, the input device 230 may be formed in a circular shape. Although the diagram illustrates an example in which the input device 230 is formed in a ring-type circular shape, the input device 230 may be formed in various shapes such as a square and a polygon.

In an embodiment, a housing 510 may include a battery 520 disposed inside the housing 510 and a substrate 530 including a plurality of electrical elements. In an embodiment, the battery 520 and the substrate 530 may be disposed in opposite directions.

In an embodiment, the substrate 530 may be disposed to be attached to the inner peripheral surface of the housing 510. For example, the substrate 530 may include a flexible printed circuit board (FPCB).

For example, the inner peripheral surface of the housing 510 may refer to a surface (e.g., inside) that touches the finger when the user wears the ring-type input device 230 on the finger. The outer peripheral surface of the housing 510 may refer to a surface (e.g., outside) that does not touch the finger when the user wears the ring-type input device 230 on the finger. For example, the outer peripheral surface of the housing 510 may correspond to a large circular circumference, and the inner peripheral surface may have a small circular circumference.

In an embodiment, a plurality of electrical elements disposed on the substrate 530 include a power management integrated circuit (PMIC) 535, a communication circuit 540, a memory 550, an inertial sensor 555, a sensor receiver 560, a sensor light-emitting unit 565, a sensor control circuit 570, a temperature sensor 575, and/or a processor 545.

In an embodiment, the input device 230 may further include a charging interface 525 and an antenna 580 disposed to electrically connect the battery 520 and the substrate 530 by being attached to the inner peripheral surface of the housing 510.

Among a plurality of electrical devices disposed on the substrate 530 according to an embodiment, the communication circuit 540, the memory 550, the inertial sensor 555, the sensor receiver 560, the sensor light-emitting unit 565, and the processor 545 are substantially the same as the communication circuit 410, the memory 420, the inertial sensor 431, the receiver and the light-emitting unit of the optical sensor 433, and the processor 450 of the input device 230 described in FIG. 4, and thus detailed descriptions related thereto may be replaced by the description in FIG. 4.

In an embodiment, the PMIC 535 may manage power supplied to the input device 230. The sensor control circuit 570 may control operations of the sensor receiver 560 and the sensor light-emitting unit 565. For example, the sensor control circuit 570 may control the sensor light-emitting unit 565 such that an optical signal is emitted in a designated pattern. The sensor control circuit 570 may measure the time at which the sensor light-emitting unit 565 emits an optical signal. The sensor control circuit 570 may measure the time difference (or phase difference) at which the optical signal emitted from the sensor light-emitting unit 565 is reflected by an external object and received by the sensor light receiver 560. However, the disclosure is not limited thereto.

In an embodiment, the temperature sensor 575 may measure a biological temperature. The disclosure is not limited thereto, and the temperature sensor 575 may measure the temperature of at least one of a plurality of electrical elements included in the input device 230.

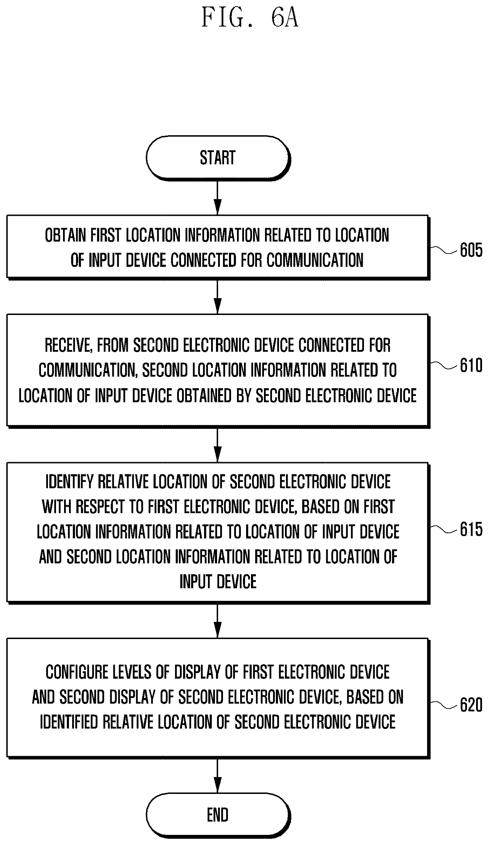

FIG. 6A is a diagram illustrating a method of configuring the level of a display 351 of a first electronic device 210 and a second display 221 of a second electronic device 220, according to an embodiment of the disclosure.

In the following embodiment, each operation may be performed in sequence, but is not necessarily performed in sequence. For example, the order of each operation may be changed, and at least two operations may be performed in parallel.

According to an embodiment, operation 605 to operation 620 may be understood to be performed by the processor (e.g., the processor 360 of FIG. 3) of the first electronic device (e.g., the first electronic device 210 of FIG. 2).

In various embodiments, the first electronic device 210, the second electronic device (e.g., the second electronic device 220 of FIG. 2), and the input device (e.g., the input device 230 of FIG. 2) may be connected for communication (communicating) through designated communication. The designated communication may include short-range wireless communication such as UWB, Bluetooth, or low-power Bluetooth.

Referring to FIG. 6A, in operation 605, the processor 360 may obtain first location information related to the location of the input device 230 connected for communication.

In an embodiment, the input device 230 may include a wearable electronic device (e.g., a smart ring 230) that may be worn on a part of the body (e.g., a finger). The disclosure is not limited thereto, and the input device 230 may include an electronic pen, or other input device. The input device 230 may include a light-emitting unit (e.g., the optical sensor 433 of FIG. 4). In an embodiment, the light-emitting unit may emit an optical signal of a designated pattern. The optical signal of the designated pattern may refer to an optical signal of a specific pattern, a specific period, and/or a specific length. However, the disclosure is not limited thereto.

In an embodiment, the input device 230 may emit an optical signal of a designated pattern through the light-emitting unit under a designated condition. For example, the designated condition may include a case where the input device 230 receives a signal related to configuring the level of a display (e.g., the display 351 of FIG. 3) from the first electronic device 210. The disclosure is not limited thereto, and the designated condition may include a case where the input device 230 is connected to the first electronic device 210 and/or the second electronic device 220 for communication.

In an embodiment, the processor 360 may obtain first location information related to the location of the input device 230 through information related to movement of the input device 230 received from a distance measurement sensor (e.g., the distance measurement sensor 341 of FIG. 3), a camera (e.g., the camera 330 of FIG. 3), UWB communication, and/or the input device 230. The processor 360 may obtain the first location information related to the location of the input device 230. In this regard, it will be described in detail below.

In an embodiment, the processor 360 may receive an optical signal of a designated pattern that emits light from the light-emitting unit of the input device 230 through the receiver of the distance measurement sensor 341. The processor 360 may obtain first location information related to the location of the input device 230, based on receiving an optical signal of a designated pattern emitted from the light-emitting unit of the input device 230 through the receiver of the distance measurement sensor 341. For example, the processor 360 may obtain first location information related to the location of the input device 230, based on a timeline that receives an optical signal of a designated pattern from the input device 230. The processor 360 may store a timeline (e.g., time information) for a time point at which an optical signal of a designated pattern emitted from the light-emitting unit of the input device 230 is received in a memory (e.g., the memory 320 of FIG. 3).

In an embodiment, the processor 360 may obtain first location information related to the location of the input device 230 through a camera (e.g., the camera 330 of FIG. 3). For example, the processor 360 may track an optical signal of a designated pattern emitted from the light-emitting unit of the input device 230 by using the camera 330. The processor 360 may obtain first location information related to the location of the input device 230, based on tracking the optical signal of a designated pattern. For example, the first location information related to the location of the input device 230 according to tracking the optical signal through the camera 330 may include information related to the movement of the input device 230 (e.g., movement in a specific direction). The processor 360 may map a timeline at a time point at which the optical signal is received and location information of the input device 230 for each timeline, and store the same in the memory 320. For example, the processor 360 may map the time information (e.g.., time point(s)) at which the optical signal is received with the location information of the input device 230 received during the time information (timeline), and store the (mapped) information in the memory 320.

In an embodiment, the processor 360 may obtain first location information related to the location of the input device 230 through UWB communication. For example, the processor 360 may broadcast a first message (e.g., a poll message) for distance measurement through the UWB communication. The UWB communication may include communication for measuring the distance (or location) between the first electronic device 210 and the input device 230 in a two-way ranging (TWR) method between the first electronic device 210 and the input device 230. In an embodiment, the TWR method may include a single side TWR (SS-TWR) method or a double side TWR (DS-TWR) method.

In an embodiment, the SS-TWR method may be a method in which the first electronic device 210 transmits the first message (e.g., a poll message) to the input device 230, and the input device 230 transmits the second message (e.g., a response message) to the first electronic device 210. In the SS-TWR, the first electronic device 210 may measure (or calculate) the distance to the input device 230, based on the difference between the time when the first message (e.g., a poll message) is transmitted and the time when the second message (e.g., a response message) is received from the input device 230. In an embodiment, the processor 360 may store in the memory 320 the time when the first message (e.g., a poll message) is transmitted, the time when the second message (e.g., a response message) is received from the input device 230, and/or the measured distance to the input device 230.

In an embodiment, the DS-TWR method may be a method in which the first electronic device 210 transmits the first message (e.g., a poll message), and the input device 230 transmits the second message (e.g., a response message) to the first electronic device 210. In response to the second message (e.g., a response message), the first electronic device 210 may transmit a third message (e.g., a final message) including a response time calculated based on the difference between the transmission time of the first message (e.g., a poll message) and the reception time of the second message (e.g., a response message) received from the input device 230. The first electronic device 210 may measure (or calculate) the distance to the input device 230 based on the first message, the second message, and the third message. In an embodiment, the processor 360 may store in the memory 320 the time when the first message (e.g., a poll message) is transmitted, the time when the second message (e.g., a response message) is received from the input device 230, the time when the third message (e.g., a final message) is transmitted, and/or the measured distance to the input device 230.

In an embodiment, the processor 360 may obtain first location information related to the location of the input device 230, based on information related to the movement of the input device 230 received from the input device 230. For example, the input device 230 may obtain information related to the movement of the input device 230 by using an inertial sensor (e.g., the inertial sensor 431 of FIG. 4). For example, information related to the movement of the input device 230 may include movement speed information, movement direction information, movement distance information, and/or inclination information of the input device 230. However, the disclosure is not limited thereto. The input device 230 may transmit information related to the movement of the input device 230 obtained through the inertial sensor 431 to the first electronic device 210 connected for communication. The processor 360 may obtain first location information related to the location of the input device 230, based on information related to the movement of the input device 230 received from the input device 230. The processor 360 may map information related to the movement of the input device 230 and time information at a time point at which information related to the movement is received from the input device 230, and store the mapping data in the memory 320.

In an embodiment, first location information related to the location of the input device 230 is obtained based on each of information related to reception of an optical signal of a designated pattern, tracking of an optical signal by using the camera 330, UWB communication, and movement of the input device 230, but is not limited thereto. For example, the processor 360 may obtain first location information related to the location of the input device 230 based on a combination of at least two or more of information related to reception of an optical signal of a designated pattern, tracking of an optical signal by using the camera 330, UWB communication, and movement of the input device 230.

In an embodiment, in operation 610, the processor 360 may receive second location information related to the location of the input device 230 obtained by the second electronic device 220 from the second electronic device (e.g., the second electronic device 220 of FIG. 2) connected for communication.

In an embodiment, the second electronic device 220 may obtain the second location information related to the location of the input device 230 in the same method as the method in which the above-described first electronic device 210 obtains first location information related to the location of the input device 230.

For example, the second electronic device 220 may receive an optical signal of a designated pattern from the light-emitting unit of the input device 230 that emits light, through the receiver of a distance measurement sensor. The second electronic device 220 may obtain second location information related to the location of the input device 230, based on receiving an optical signal of a designated pattern emitted from the light-emitting unit of the input device 230 through the receiver of the distance measurement sensor. For example, the second electronic device 220 may obtain second location information related to the location of the input device 230, based on a timeline that receives an optical signal of a designated pattern from the input device 230. The second electronic device 220 may store a timeline (e.g., time information) for a time point at which an optical signal of a designated pattern emitted from the light-emitting unit of the input device 230 is received in a memory.

For example, the second electronic device 220 may track an optical signal of a designated pattern emitted from the light-emitting unit of the input device 230 by using a camera. The second electronic device 220 may obtain second location information (e.g., information related to movement (e.g., movement in a specific direction) of the input device 230) related to the location of the input device 230, based on tracking an optical signal of a designated pattern. The second electronic device 220 may map a timeline at the time of receiving the optical signal and location information of the input device 230 for each timeline and store the same in a memory.

For example, the second electronic device 220 may obtain second location information related to the location of the input device 230 through UWB communication. For example, the second electronic device 220 may measure (or calculate) the distance to the input device 230, based on the difference between the time when the first message (e.g., a poll message) is transmitted to the input device 230 and the time when the second message (e.g., a response message) is received from the input device 230 through the SS-TWR method. The second electronic device 220 may store the time when the first message (e.g., a poll message) is transmitted, the time when the second message (e.g., a response message) is received from the input device 230, and/or the measured distance to the input device 230 in a memory. Alternatively, when the second electronic device 220 transmits the first message (e.g., a poll message) through the DS-TWR method, the input device 230 may transmit the second message (e.g., a response message) to the second electronic device 220. In response to the second message, the second electronic device 220 may transmit a third message (e.g., a final message) including a response time calculated based on the difference between the transmission time of the first message and the reception time of the second message received from the input device 230 to the input device 230. The second electronic device 220 may measure (or calculate) the distance to the input device 230, based on the first message, the second message, and the third message. The second electronic device 220 may store the time when the first message (e.g., a poll message) is transmitted, the time when the second message (e.g., a response message) is received from the input device 230, the time when the third message (e.g., a final message) is transmitted, and/or the measured distance to the input device 230 in a memory.

For example, the second electronic device 220 may obtain second location information related to the location of the input device 230 based on information (e.g., movement speed information, movement direction information, movement distance information, and/or inclination information) related to the movement of the input device 230 received from the input device 230. The second electronic device 220 may map information related to the movement of the input device 230 and time information at a time point at which information related to the movement is received from the input device 230, and store the mapping data in the memory 320.

In an embodiment, the second electronic device 220 may transmit second location information related to the location of the input device 230 obtained based on at least one of information related to reception of an optical signal, tracking of an optical signal, UWB communication, and movement of the input device 230 of a designated pattern described above to the first electronic device 210 connected for communication.

In an embodiment, in operation 615, the processor 360 may identify a relative location of the second electronic device 220 with respect to the first electronic device 210, based on the first location information related to the location of the input device 230 and the second location information related to the location of the input device 230.

In an embodiment, the processor 360 may estimate the location and/or movement of the input device 230 based on the first location information related to the location of the input device 230 obtained by the first electronic device 210 and the second location information related to the location of the input device 230 received from the second electronic device 220. The first location information of the input device 230 obtained by the first electronic device 210 at a specific time point and the second location information of the input device 230 obtained by the second electronic device 220 may be different. For example, when a movement of the input device 230 occurs (e.g., a movement moved in a specific direction occurs), the first location information of the input device 230 obtained by the first electronic device 210 at a specific time point and the second location information of the input device 230 obtained by the second electronic device 220 at a specific time point may be different. For example, as a movement of the input device 230 occurs (e.g., a movement moved in a specific direction occurs), the first electronic device 210 may obtain the first location information of the input device 230 at a specific time point, or the second electronic device 220 may not obtain the second location information of the input device 230. Alternatively, as a movement of the input device 230 occurs (e.g., a movement moved in a specific direction occurs), the first electronic device 210 may receive an optical signal of a designated pattern in a first form (or a first shape) at a specific time point, while the second electronic device 220 may receive an optical signal of a designated pattern in a second form (or a second shape) (e.g., a second form different from the first form).

In an embodiment, the processor 360 may compare the first location information of the input device 230 obtained by the first electronic device 210 with the second location information of the input device 230 received from the second electronic device 220 in a timeline. The processor 360 may compare the first location information and the second location information from the first to the n-th time points, in chronological order. The processor 360 may estimate the location and/or movement of the input device 230, based on a result of comparing the first location information of the input device 230 obtained by the first electronic device 210 with the second location information of the input device 230 received from the second electronic device 220 in a timeline. For example, the movement of the input device 230 may include a movement direction. However, the disclosure is not limited thereto.

In an embodiment, the processor 360 may estimate a movement direction according to the movement of the input device 230, for example, movement in a direction in which the second electronic device 220 is located while the input device 230 is located in front of the first electronic device 210, or movement in a direction in which the first electronic device 210 is located while the input device 230 is located in front of the second electronic device 220. The processor 360 may identify the relative location of the second electronic device 220 with respect to the first electronic device 210, based on the estimated movement direction according to the movement of the input device 230.

In an embodiment, in operation 620, the processor 360 may configure the levels of the display (e.g., the display 351 of FIG. 3), e.g., a display arrangement, of the first electronic device 210 and the second display (e.g., the second display 221 of FIG. 2) of the second electronic device 220, based on the identified relative location of the second electronic device 220.

For example, when the movement direction according to movement of the input device 230 is estimated to be the direction in which the second electronic device 220 is located in the front of the first electronic device 210, the processor 360 may configure the display 351 of the first electronic device 210 as a primary display, and configure the second display 221 of the second electronic device 220 as a secondary display. For example, when the movement direction of the input device 230 is estimated to be the direction in which the first electronic device 220 is located in the front of the second electronic device 210, the processor 360 may configure the second display 221 of the second electronic device 220 as a primary display, and configure the display 351 of the first electronic device 210 as a secondary display.

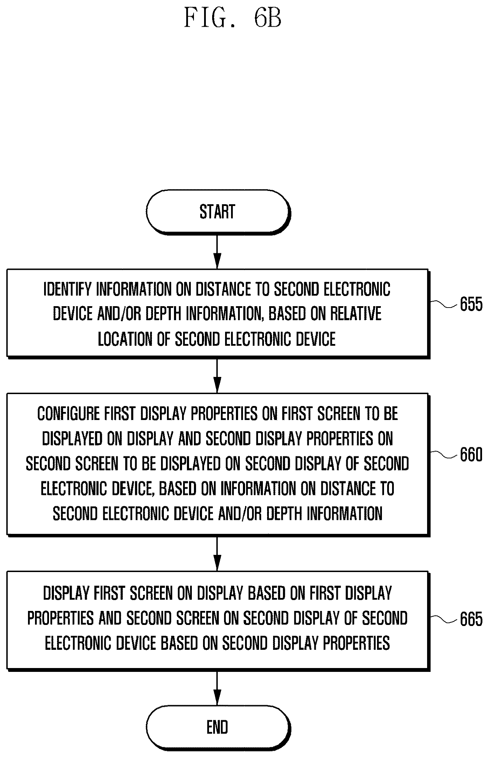

FIG. 6B is a flowchart illustrating a method of controlling a screen by using an input device 230 of a first electronic device 210, according to an embodiment of the disclosure.

In the following embodiment, each operation may be performed in sequence, but is not necessarily performed in sequence. For example, the order of each operation may be changed, and at least two operations may be performed in parallel.

According to an embodiment, operation 655 to operation 665 may be understood to be performed by the processor (e.g., the processor 360 of FIG. 3) of the first electronic device (e.g., the first electronic device 210 of FIG. 2).

FIG. 6B according to an embodiment may be an additional operation of FIG. 6A described above.

Referring to FIG. 6B, in operation 655, the processor 360 may identify distance information to the second electronic device 220 and/or depth information, based on the relative location of the second electronic device (e.g., the second electronic device 220 of FIG. 2). For example, the processor 360 may identify distance information to the second electronic device 220 and/or depth information, based on the first location information related to the location of the input device (e.g., the input device 230 of FIG. 2) obtained by the first electronic device 210 and the second location information related to the location of the input device 230 received from the second electronic device 220. The disclosure is not limited thereto, and the processor 360 may identify distance information to the second electronic device 220 and/or depth information through UWB communication.

In an embodiment, in operation 660, the processor 360 may configure first display properties on the first screen to be displayed on a display (e.g., the display 351 of FIG. 3) based on distance information to the second electronic device 220 and/or depth information, and configure second display properties on the second screen to be displayed on the second display (e.g., the second display 221 of FIG. 2) of the second electronic device 220. For example, the processor 360 may differently or equally configure the display properties of the first screen to be displayed on the display 351 of the first electronic device 210 and the second screen to be displayed on the second display 221 of the second electronic device 220, based on the distance information to the second electronic device 220 and/or depth information. For example, the display properties may include a display resolution, a scanning rate, a brightness, and/or a size of at least one object constituting the screen. However, the disclosure is not limited thereto.

A size of at least one object constituting a screen according to an embodiment will be described as an example of the display properties.

For example, based on the distance information to the second electronic device 220 and/or depth information, when it is identified that the second electronic device 220 is located on the right and in front of the first electronic device 210 with respect to the first electronic device 210 while the user looks at the first electronic device 210, the processor 360 may configure the display properties to display the size of at least one object constituting the first screen to be displayed on the display 351 of the first electronic device 210 as a first size, and may configure the display properties to display the size of at least one object constituting the second screen to be displayed on the second display 221 of the second electronic device 220 as a second size smaller than the first size.

For example, based on the distance information and/or depth information, when it is identified that the second electronic device 220 is located on the right and behind the first electronic device 210 with respect to the first electronic device 210 while the user looks at the electronic device 210, the processor 360 may configure the display properties to display the size of at least one object constituting the first screen to be displayed on the display 351 of the first electronic device 210 as the second size (e.g., the second size smaller than the first size), and may configure the display properties to display the size of at least one object constituting the second screen to be displayed on the second display 221 of the second electronic device 220 as the first size.

For example, the first electronic device 210 may identify distance information to the second electronic device 220 and/or depth information at designated time intervals. The first electronic device 210 may configure display properties of the first screen to be displayed on the display 351 and display properties of the second screen to be displayed on the second display 221 of the second electronic device 220 to correspond to the movement of the second electronic device 220 (or the first electronic device 210), based on distance information to the second electronic device 220 and/or depth information at designated time intervals. For example, while the user looks at the first electronic device 210, based on the distance information and/or depth information identified at the designated time interval, when the location of the second electronic device 220 is identified (e.g., changed or moved) from the right of and behind the first electronic device 210 to the right of and in front of the first electronic device 210 with respect to the first electronic device 210, at least one object constituting the second screen to be displayed on the second display 221 of the second electronic device 220 may be displayed by applying a visual effect in which the size of the object gradually decreases. Alternatively, while the user looks at the first electronic device 210, based on the distance information and/or depth information identified at the designated time interval, when the location of the second electronic device 220 is identified (e.g., changed or moved) from the right of and in front of the first electronic device 210 to the right of and behind the first electronic device 210 with respect to the first electronic device 210, at least one object constituting the second screen to be displayed on the second display 221 of the second electronic device 220 may be displayed by applying a visual effect in which the size of the object gradually increases. Accordingly, natural continuity between the first screen and the second screen may be provided to the display 351 of the first electronic device 210 and the second display 221 of the second electronic device 220, respectively.

In an embodiment, in operation 665, the processor 360 may display the first screen on the display 351 based on the first display properties and display the second screen on the second display 221 of the second electronic device 220 based on the second display properties. For example, the processor 360 may control the display 351 to display the first screen to which the first display properties are applied, and control the second display 221 to display the second screen to which second display properties are applied.

In FIGS. 6A and 6B according to various embodiments, the first electronic device 210 may estimate the location and/or movement (e.g., movement direction) of the input device 230 to identify the relative location of the second electronic device 220 with respect to the first electronic device 210, based on the first location information related to the location of the input device 230 obtained by the first electronic device 210 and the second location information related to the location of the input device 230 obtained by the second electronic device 220. As the levels of the display 351 and the second display 221 may be configured according to the identified relative location of the second electronic device 220, the first electronic device 210 may provide the user with the ability to easily configure the display level. In addition, the first electronic device 210 may provide natural continuity between screens to be displayed on the display 351 of the first electronic device 210 and the second display 221 of the second electronic device 220 by configuring the display properties of the screens to be displayed on each of the display 351 of the first electronic device 210 and the second display 221 of the second electronic device 220 based on distance information to the second electronic device 220 and/or depth information.

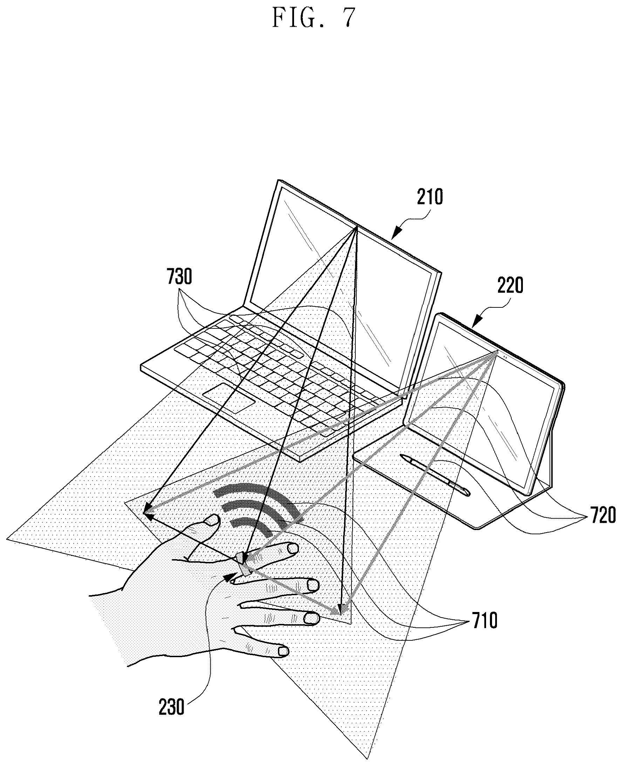

FIG. 7 is a diagram illustrating a method of controlling a screen by using an input device 230 of a first electronic device 210, according to an embodiment of the disclosure.

Referring to FIG. 7, the first electronic device (e.g., the first electronic device 210 of FIG. 2), the second electronic device (e.g., the second electronic device 220 of FIG. 2), and the input device (e.g., the input device 230 of FIG. 2) may be connected for communication through designated communication (e.g., short-range communication).

FIG. 7 according to various embodiments is a diagram illustrating a method of obtaining location information of the input device 230 through a distance measurement sensor (e.g., distance measurement sensor 341 of FIG. 3) and/or UWB communication.

In an embodiment, the input device 230 may emit 710 an optical signal of a designated pattern through the light-emitting unit. The first electronic device 210 may receive an optical signal of a designated pattern emitted from the light-emitting unit of the input device 230 through the light-emitting unit of a distance measurement sensor (e.g., the distance measurement sensor 341 of FIG. 3). The first electronic device 210 may obtain first location information of the input device 230, based on receiving an optical signal of a designated pattern emitted from the light-emitting unit of the input device 230 through the receiver of the distance measurement sensor 341. For example, the first electronic device 210 may obtain first location information related to the location of the input device 230, based on a timeline that receives an optical signal (e.g., time information of the received optical signal) of a designated pattern from the input device 230.

The second electronic device 220 may also obtain second location information of the input device 230, based on receiving an optical signal of a designated pattern emitted from the light-emitting unit of the input device 230 through the receiver of the distance measurement sensor 341. For example, the second electronic device 220 may obtain second location information related to the location of the input device 230, based on a timeline that receives an optical signal (e.g., time information of the received optical signal) of a designated pattern from the input device 230.

Although it is described that the first electronic device 210 and the second electronic device 220 according to various embodiments receive an optical signal of a designated pattern emitted from the light-emitting unit of the input device 230 through the receiver of the distance measurement sensor, the disclosure is not limited thereto. For example, the first electronic device 210 and the second electronic device 220 may receive an optical signal of a designated pattern emitted from the light-emitting unit of the input device 230 through a proximity light sensor or an illuminance sensor.

This is an example of a method for obtaining location information of the input device 230 according to various embodiments, and is not limited to the method described above, and the first electronic device 210 may obtain first location information related to the location of the input device 230 by using a time difference (or phase difference) that the light 730 emitted from the light-emitting unit of the distance measurement sensor 341 is reflected by the input device 230 and received by the light receiver. The second electronic device 220 may also obtain second location information related to the location of the input device 230 by using a time difference (or phase difference) that the light 720 emitted from the light-emitting unit of the distance measurement sensor is reflected by the input device 230 and received by the light receiver.

The disclosure is not limited thereto, and the first electronic device 210 may obtain first location information of the input device 230 through UWB communication. For example, the first electronic device 210 may measure (or calculate) the distance to the input device 230, based on the difference between the time when the first message (e.g., a poll message) is transmitted to the input device 230 and the time when the second message (e.g., a response message) is received from the input device 230 through the SS-TWR method. The first electronic device 210 may obtain first location information related to the location of the input device 230 based on the measured (or calculated) distance to the input device 230. For example, when the first electronic device 210 transmits the first message (e.g., a poll message) through the DS-TWR method, the input device 230 may transmit the second message (e.g., a response message) to the first electronic device 210. In response to the second message, the first electronic device 210 may transmit a third message (e.g., a final message) including a response time calculated based on the difference between the transmission time of the first message and the reception time of the second message received from the input device 230 to the input device 230. The first electronic device 220 may measure (or calculate) the distance to the input device 230, based on the first message, the second message, and the third message. The first electronic device 210 may obtain first location information related to the location of the input device 230 based on the measured (or calculated) distance to the input device 230.

In an embodiment, the second electronic device 220 may also obtain second location information of the input device 230 through UWB communication. For example, the second electronic device 220 may measure (or calculate) the distance to the input device 230, based on the difference between the time when the first message (e.g., a poll message) is transmitted to the input device 230 and the time when the second message (e.g., a response message) is received from the input device 230 through the SS-TWR method. The second electronic device 220 may obtain second location information related to the location of the input device 230 based on the measured (or calculated) distance to the input device 230. For example, when the second electronic device 220 transmits the first message (e.g., a poll message) through the DS-TWR method, the input device 230 may transmit the second message (e.g., a response message) to the second electronic device 220. In response to the second message, the second electronic device 220 may transmit a third message (e.g., a final message) including a response time calculated based on the difference between the transmission time of the first message and the reception time of the second message received from the input device 230 to the input device 230. The second electronic device 220 may measure (or calculate) the distance to the input device 230, based on the first message, the second message, and the third message. The second electronic device 220 may obtain second location information related to the location of the input device 230 based on the measured (or calculated) distance to the input device 230.

In an embodiment, the second electronic device 220 may transmit the obtained second location information of the input device 230 to the first electronic device 210. The first electronic device 210 may also transmit the obtained first location information of the input device 230 to the second electronic device 220. The first electronic device 210 may identify the relative location of the second electronic device 220 with respect to the first electronic device 210, based on the first location information of the input device 230 and the second location information of the input device 230. The first electronic device 210 may configure the levels (e.g., a display arrangement) of the display (e.g., the display 351 of FIG. 3) of the first electronic device 210 and the second display (e.g., the second display 221 of FIG. 2) of the second electronic device 220, based on the identified relative location of the second electronic device 220.

In an embodiment, the first electronic device 210 may configure display properties on a screen to be displayed on the display 351 and the second display 221 of the second electronic device 220, based on information of the distance to the second electronic device 220 and/or depth information. For example, the display properties may include the resolution, scanning rate, brightness of the display (e.g., the display 351 and the second display 221), and/or the size of at least one object constituting a screen. The first electronic device 210 may display a screen on each of the display 351 and the second display 221 of the second electronic device 220, based on the configured display properties.

In an embodiment, although the first electronic device 210 identifies the relative location of the second electronic device 220, the disclosure is not limited thereto. For example, the second electronic device 220 may identify the relative location of the first electronic device 210 with respect to the second electronic device 220, based on the first location information of the input device 230 received from the first electronic device 210 and the second location information of the input device 230 obtained by the second electronic device 220.

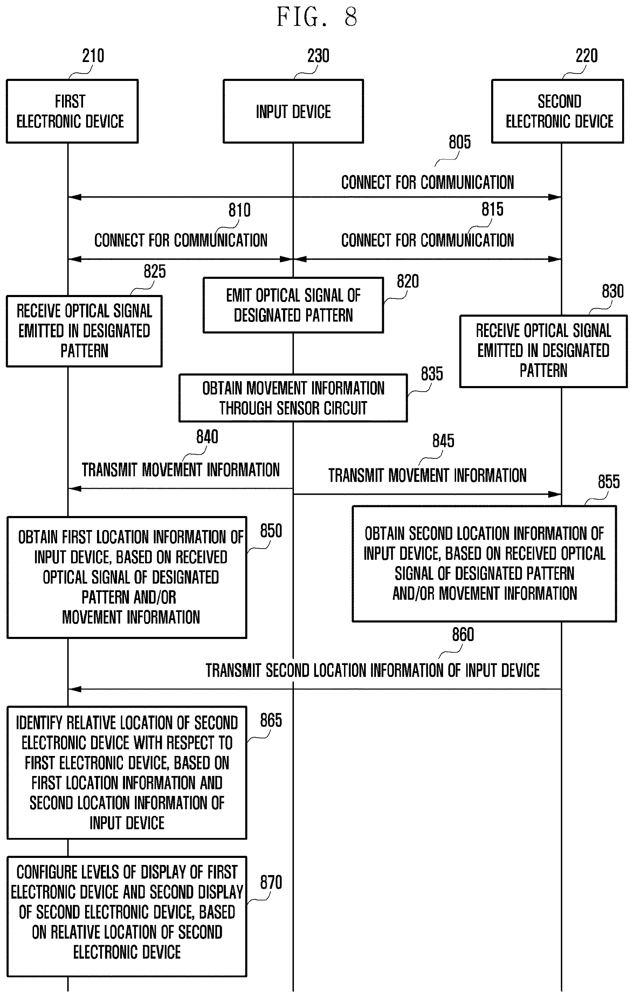

FIG. 8 is a diagram illustrating a method of configuring the level of a display 351 of a first electronic device 210 and a second display 221 of a second electronic device 220, according to an embodiment of the disclosure.

In the following embodiment, each operation may be performed in sequence, but is not necessarily performed in sequence. For example, the order of each operation may be changed, and at least two operations may be performed in parallel.

FIG. 8, which will be described later, is a diagram illustrating a method of obtaining location information of the input device 230 based on an optical signal of a designated pattern emitted from the light-emitting unit of the input device 230, and movement information of the input device 230.

Referring to FIG. 8, in operation 805, the first electronic device 210 may be connected to the second electronic device 220 for communication. In operation 810, the first electronic device 210 may be connected to the input device 230 for communication. In operation 815, the second electronic device 220 may be connected to the input device 230 for communication. For example, the first electronic device 210, the second electronic device 220, and the input device 230 may be connected to each other for communication through designated communication (e.g., short-range communication such as UWB, Bluetooth, or low-power Bluetooth).

In an embodiment, in operation 820, the input device 230 may emit an optical signal of a designated pattern. For example, the input device 230 may emit an optical signal of a designated pattern through a light-emitting unit (e.g., the light-emitting unit of the optical sensor 433 of FIG. 4). In an embodiment, the optical signal of the designated pattern may refer to an optical signal of a specific pattern, a specific period, and/or a specific length. However, the disclosure is not limited thereto.

In an embodiment, in operation 825, the first electronic device 210 may receive an optical signal emitted in a designated pattern from the light-emitting unit of the input device 230. Although not illustrated, the first electronic device 210 may store time information on a time point at which an optical signal emitted in a designated pattern is received from the light-emitting unit of the input device 230 in a memory (e.g., the memory 320 of FIG. 3). In operation 830, the second electronic device 220 may receive an optical signal emitted in a designated pattern from the light-emitting unit of the input device 230. Although not illustrated, the second electronic device 220 may store time information on a time point at which an optical signal emitted in a designated pattern is received from the light-emitting unit of the input device 230 in a memory.

In an embodiment, in operation 835, the input device 230 may obtain movement information of the input device 230 through a sensor circuit (e.g., the sensor circuit 430 of FIG. 4 (e.g., the inertial sensor 431 of FIG. 4)). For example, the movement information of the input device 230 may include movement speed information, movement direction information, movement distance information, and/or inclination information of the input device 230. However, the disclosure is not limited thereto.

In an embodiment, in operation 840, the input device 230 may transmit the obtained movement information (e.g., movement speed information, movement direction information, movement distance information, and/or inclination information) to the first electronic device 210. In operation 845, the input device 230 may transmit the obtained movement information (e.g., movement speed information, movement direction information, movement distance information, and/or inclination information) to the second electronic device 220.

In an embodiment, in operation 850, the first electronic device 210 may obtain first location information of the input device 230, based on the received optical signal of the designated pattern and/or movement information of the input device 230. For example, the first electronic device 210 may obtain the first location information of the input device 230, based on a timeline receiving an optical signal of a designated pattern from the input device 230 and/or movement information for each timeline. Although not illustrated, the first electronic device 210 may transmit the obtained first location information of the input device 230 to the second electronic device 220.

In an embodiment, in operation 855, the second electronic device 220 may obtain second location information of the input device 230, based on the received optical signal of the designated pattern and/or movement information of the input device 230. For example, the second electronic device 220 may obtain the second location information of the input device 230, based on a timeline receiving an optical signal of a designated pattern from the input device 230 and/or movement information for each timeline. In operation 860, the second electronic device 220 may transmit the obtained second location information of the input device 230 to the first electronic device 210.

In an embodiment, in operation 865, the first electronic device 210 may identify the relative location of the second electronic device 220 with respect to the first electronic device 210, based on the first location information and the second location information of the input device 230. For example, the first electronic device 210 may compare the first location information with the second location information of the input device 230 in a timeline, and estimate the location and/or movement of the input device 230 based on the comparison result. For example, the first electronic device 210 may estimate movement in a movement direction, for example, the direction in which the second electronic device 220 is located while the input device 230 is located in front of the first electronic device 210, according to the movement of the input device 230, or movement in a movement direction in which the first electronic device 210 is located while being located in front of the second electronic device 220.

In an embodiment, in operation 870, the first electronic device 210 may configure the levels (e.g., display arrangement of) of the display (e.g., the display 351 of FIG. 3) of the first electronic device 210 and the second display (e.g., the second display 221 of FIG. 2) of the second electronic device 220, based on the relative location of the second electronic device 220. For example, when the movement direction according to movement of the input device 230 is estimated to be the direction in which the second electronic device 220 is located in the front of the first electronic device 210, the processor 360 may configure the display 351 of the first electronic device 210 as a primary display, and configure the second display 221 of the second electronic device 220 as a secondary display. For example, when the movement direction of the input device 230 is estimated to be the direction in which the first electronic device 220 is located in the front of the second electronic device 210, the processor 360 may configure the second display 221 of the second electronic device 220 as a primary display, and configure the display 351 of the first electronic device 210 as a secondary display.

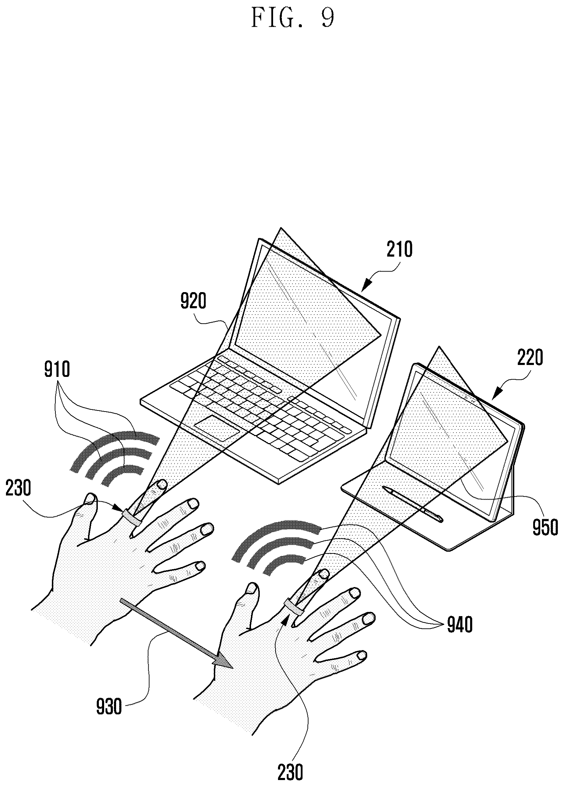

FIG. 9 is a diagram illustrating a method of controlling a screen by using an input device 230 of a first electronic device 210, according to an embodiment of the disclosure.

In an embodiment, the light-emitting unit of the optical sensor (e.g., the optical sensor 433 of FIG. 4) of the input device (e.g., the input device 230 of FIG. 2) may include a vertical cavity surface emitting laser (VCSEL).

FIG. 9, which will be described below, is a diagram for explaining a method for the input device 230 to emit an optical signal of a specific waveform at a designated angle (e.g., about 10 to 20 degrees) by using the VCSEL, and a method for the first electronic device (e.g., the first electronic device 210 of FIG. 2) or the second electronic device (e.g., the second electronic device 220 of FIG. 2) to receive the optical signal and configure the levels of the display (e.g., the display 351 of FIG. 3) and the second display 221 of the second electronic device 220.

In an embodiment, the input device 230 may emit an optical signal of a designated angle by using the VCSEL. For example, the designated angle may be about 10 to 20 degrees. As the optical signal is emitted at an angle of about 10 to 20 degrees through the VCSEL, the optical signal may be received by the first electronic device 210 and/or the second electronic device (e.g., the second electronic device 220 of FIG. 2). When the first electronic device 210 or the second electronic device 220 receives the optical signal, the sensitivity of the received optical signal may be identified. When the sensitivity of the identified optical signal exceeds a specific sensitivity, the first electronic device 210 and the second electronic device 220 may process the identified optical signal as a valid optical signal. In other words, the first electronic device 210 and the second electronic device 220 may use the optical signal exceeding the specific sensitivity to obtain location information of the input device 230.

Referring to FIG. 9, the input device 230 may emit (910) an optical signal at a designated angle (e.g., about 10 to 20 degrees) 920 by using the VCSEL at the first location (e.g., located in front of the first electronic device 210). The first electronic device 210 may receive an optical signal emitted at the designated angle 920. In this case, the second electronic device 220 cannot receive the optical signal. The disclosure is not limited thereto, and even if the second electronic device 220 receives the optical signal, the optical signal may be less than or equal to a specific sensitivity, and in this case, the second electronic device 220 may process the optical signal as an invalid signal. In other words, the second electronic device 220 may not use the optical signal having a specific sensitivity or less to obtain location information of the input device 230.

In an embodiment, the input device 230 may move (930) from the first location (e.g., located in front of the first electronic device 210) to the second location (e.g., located in front of the second electronic device 220). The input device 230 may emit light 940 at a designated angle (e.g., about 10 to 20 degrees) 950 by using the VCSEL at the second location (e.g., located in front of the second electronic device 220. The second electronic device 220 may receive an optical signal emitted at the designated angle 950. In this case, the first electronic device 210 cannot receive the optical signal. The disclosure is not limited thereto, and even if the first electronic device 210 receives the optical signal, the optical signal may be less than or equal to a specific sensitivity, and in this case, the first electronic device 210 may process the optical signal as an invalid signal. In other words, the first electronic device 210 may not use the optical signal having a specific sensitivity or less to obtain location information of the input device 230.

In an embodiment, the input device 230 may obtain movement information of the input device 230 through a sensor circuit (e.g., the sensor circuit 430 of FIG. 4 (e.g., the inertial sensor 431 of FIG. 4)). For example, the movement information of the input device 230 may include movement speed information, movement direction information, movement distance information, and/or inclination information of the input device 230. For example, the input device 230 may transmit the movement direction information (e.g., information in which the input device 230 has moved from the first location (e.g., located in front of the first electronic device 210) to the second location (e.g., located in front of the second electronic device 220)) obtained through the sensor circuit 430 to the first electronic device 210 and/or the second electronic device 220.

In an embodiment, the first electronic device 210 may identify the relative location of the second electronic device 220 with respect to the first electronic device 210, based on the optical signal received from the input device 230 and/or the movement direction information of the input device 230, and configure the levels (e.g., the display arrangement) of the display 351 of the first electronic device 210 and the second display 221 of the second electronic device 220. For example, when it is estimated that the movement direction according to the movement of the input device 230 is moved 930 from the state located in front of the electronic device 210 to the state where the second electronic device 220 is located, the first electronic device 210 may configure the display 351 (e.g., may configure the display arrangement) of the first electronic device 210 as a primary display, and configure the second display 221 of the second electronic device 220 as a secondary display.

In an embodiment, the first electronic device 210 may configure display properties on a screen to be displayed on the display 351 and the second display 221 of the second electronic device 220, based on information of the distance to the second electronic device 220 and/or depth information. For example, the display properties may include the resolution, scanning rate, brightness of the display (e.g., display 351 and second display 221), and/or the size of at least one object constituting a screen. The first electronic device 210 may display a screen on each of the display 351 and the second display 221 of the second electronic device 220, based on the configured display properties.

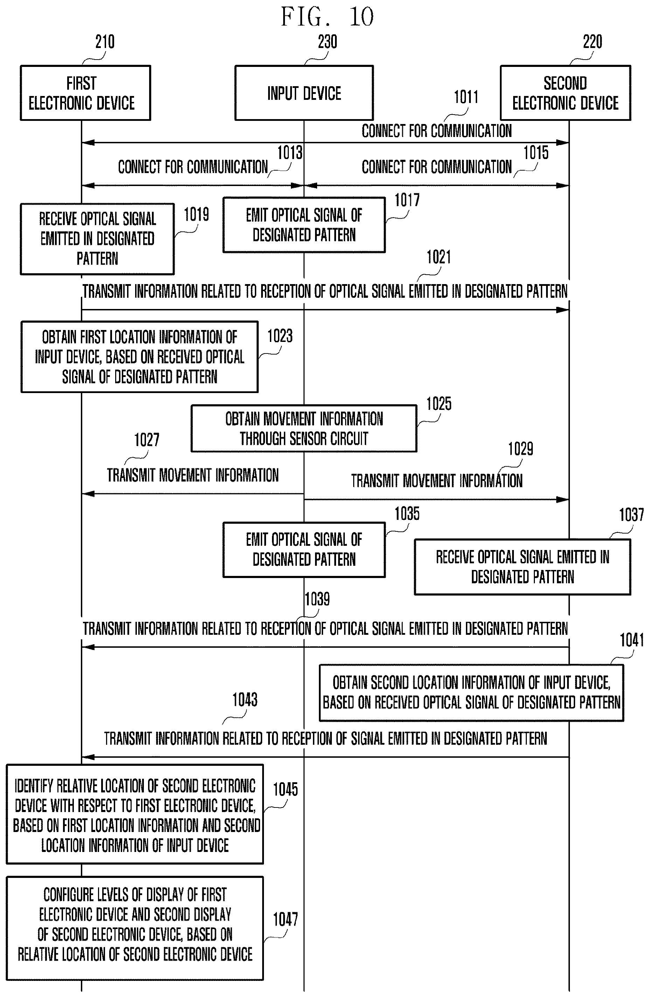

FIG. 10 is a diagram illustrating a signal flow between a first electronic device 210, an input device 230, and a second electronic device 220, according to an embodiment of the disclosure.

In the following embodiment, each operation may be performed in sequence, but is not necessarily performed in sequence. For example, the order of each operation may be changed, and at least two operations may be performed in parallel.

FIG. 10 according to an embodiment is a diagram illustrating a signal flow between the first electronic device 210, the input device 230, and the second electronic device 220 according to FIG. 9 described above.

Referring to FIG. 10, in operation 1011, the first electronic device 210 may be connected to the second electronic device 220 for communication. In operation 1013, the first electronic device 210 may be connected to the input device 230 for communication. In operation 1015, the second electronic device 220 may be connected to the input device 230 for communication. For example, the first electronic device 210, the second electronic device 220, and the input device 230 may be connected to each other for communication through designated communication (e.g., short-range communication such as UWB, Bluetooth, or low-power Bluetooth).

In an embodiment, in operation 1017, the input device 230 may emit an optical signal of a designated pattern. For example, the input device 230 may emit an optical signal of a designated pattern at a designated angle (e.g., about 10 to 20 degrees) by using the light emission unit (e.g., the light emission unit of the optical sensor 433 of FIG. 4), for example, the VCSEL.

In an embodiment, in operation 1019, the first electronic device 210 may receive an optical signal emitted in a designated pattern from the light-emitting unit of the input device 230. In operation 1021, the first electronic device 210 may transmit information related to reception of an optical signal emitted in a designated pattern to the second electronic device 220. For example, information related to reception of the optical signal emitted in the designated pattern may include time information on a time point at which the first electronic device 210 receives the optical signal. However, the disclosure is not limited thereto. In an embodiment, the first electronic device 210 and the second electronic device 220 may store information (e.g., time information on the time point at which the first electronic device 210 receives the optical signal) related to reception of the optical signal emitted in the designated pattern in a memory.

In an embodiment, as the input device 230 emits an optical signal at a designated angle (e.g., about 10 to 20) as illustrated in FIG. 9, the first electronic device 210 may receive the optical signal, but the second electronic device 220 may not receive the optical signal.

In an embodiment, in operation 1023, the first electronic device 210 may obtain first location information of the input device 230, based on the received optical signal of the designated pattern. For example, the first electronic device 210 may obtain (or estimate) the first location information related to the location of the input device 230, based on a timeline receiving an optical signal of a designated pattern from the input device 230.

In an embodiment, in operation 1025, the input device 230 may obtain movement information through a sensor circuit (e.g., the sensor circuit 430 of FIG. 4). For example, the movement information of the input device 230 may include movement speed information, movement direction information, movement distance information, and/or inclination information of the input device 230. In operation 1027, the input device 230 may transmit the movement information obtained through the sensor circuit 430 to the first electronic device 210. In operation 1029, the input device 230 may transmit the movement information obtained through the sensor circuit 430 to the second electronic device 220.

In an embodiment, as illustrated in FIG. 9, the input device 230 may move from the first location (e.g., located in front of the first electronic device 210) to the second location (e.g., located in front of the second electronic device 220). In this case, the input device 230 may transmit movement direction information indicating that the input device 230 moves from the first location (e.g., located in front of the first electronic device 210) to the second location (e.g., located in front of the second electronic device 220) to the first electronic device 210 and the second electronic device 220.

In an embodiment, in operation 1035, the input device 230 may emit an optical signal of a designated pattern. In operations 1017 and 1035 of FIG. 10 according to an embodiment, the optical signal of the designated pattern may be substantially the same optical signal, and the optical signal may be continuously emitted from the light-emitting unit of the input device 230 at designated time intervals.

In an embodiment, in operation 1037, the second electronic device 220 may receive an optical signal emitted in a designated pattern from the light-emitting unit of the input device 230. In operation 1039, the second electronic device 220 may transmit information related to reception of an optical signal emitted in a designated pattern to the first electronic device 210. For example, information related to reception of the optical signal emitted in the designated pattern may include time information on a time point at which the second electronic device 220 receives the optical signal. However, the disclosure is not limited thereto. In an embodiment, the first electronic device 210 and the second electronic device 220 may store information (e.g., time information on the time point at which the second electronic device 220 receives the optical signal) related to reception of the optical signal emitted in the designated pattern in a memory.

In an embodiment, in a state in which the input device 230 moves from the first location to the second location, as the input device 230 emits an optical signal at a designated angle (e.g., about 10 to 20) as illustrated in FIG. 9, the second electronic device 220 may receive the optical signal, but the first electronic device 210 may not receive the optical signal.

In an embodiment, in operation 1041, the second electronic device 220 may obtain second location information of the input device 230, based on the received movement information and/or an optical signal of the designated pattern. For example, the second electronic device 220 may obtain (or estimate) the second location information related to the location of the input device 230, based on a timeline receiving an optical signal of a designated pattern and/or the movement information from the input device 230.

In an embodiment, in operation 1043, the second electronic device 220 may transmit the second location information of the input device 230 to the first electronic device 210. Although not illustrated, the first electronic device 210 may store the second location information of the input device 230 received from the second electronic device 220 in the memory 320.

In an embodiment, in operation 1045, the first electronic device 210 may identify the relative location of the second electronic device 220 with respect to the first electronic device 210, based on the first location information and the second location information of the input device 230. For example, the first electronic device 210 may compare the first location information of the input device 230 obtained by the first electronic device 210 with the second location information of the input device 230 received from the second electronic device 220 in a timeline. Based on the comparison result, the first electronic device 210 may estimate the location and/or movement of the input device 230. The first electronic device 210 may identify the relative location of the second electronic device 220 with respect to the first electronic device 210, based on the estimated movement direction according to the movement of the input device 230.

In an embodiment, in operation 1047, the first electronic device 210 may configure the levels of the display (e.g., the display 351 of FIG. 3) of the first electronic device 210 and the second display (e.g., the second display 221 of FIG. 2) of the second electronic device 220, based on the relative location of the second electronic device 220.

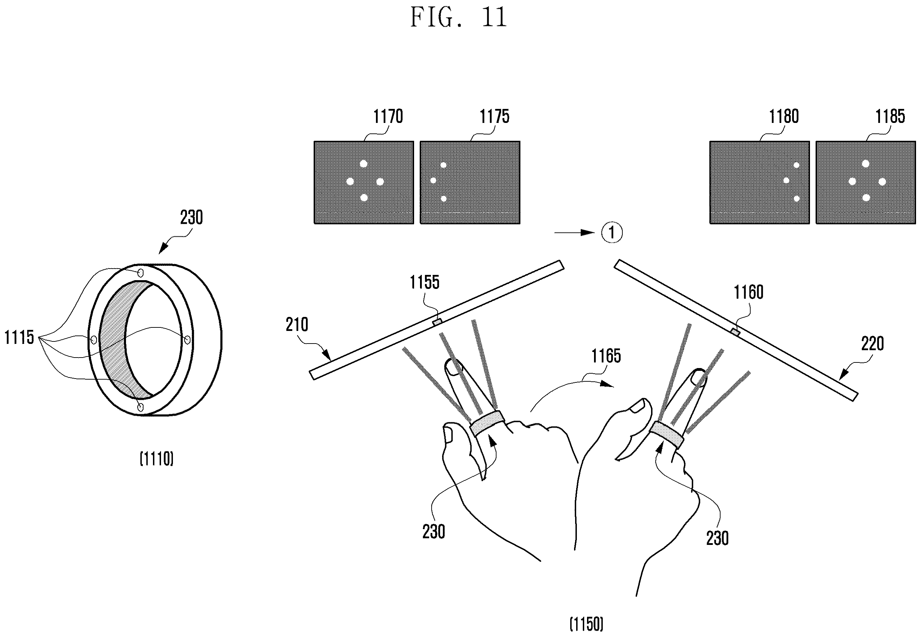

FIG. 11 is a diagram illustrating a method of identifying the relative location of a second electronic device 220 with respect to a first electronic device 210, according to an embodiment of the disclosure.

In various embodiments, the first electronic device 210 (e.g., the first electronic device 210 of FIG. 2), the second electronic device (e.g., the second electronic device 220 of FIG. 2), and the input device (e.g., the input device 230 of FIG. 2) may be connected to each other for communication through designated communication. For example, the designated communication may include short-range communication. The first electronic device 210, the second electronic device 220, and the input device 230 may be connected to each other for communication through designated communication as they approach each other. The disclosure is not limited thereto, and the first electronic device 210 may execute a function related to level configuration of a display (e.g., the display 351 of FIG. 3). In this case, the first electronic device 210 may broadcast a signal requesting a connection for communication. When receiving a response signal from each of the second electronic device 220 and the input device 230 in response to a signal requesting a first connection for communication, the first electronic device 210 may be connected to the second electronic device 220 and the input device 230 for communication through the designated communication.

Referring to FIG. 11, the input device 230 may include a plurality of light-emitting units 1115, as illustrated in reference numeral <1110>. The input device 230 may emit an optical signal (e.g., an IR optical signal) of a designated pattern through the plurality of light-emitting units 1115.

Referring to reference numeral <1150> according to an embodiment, the first electronic device 210 and the second electronic device 220 may receive (or track or sense) optical signals emitted through the plurality of light-emitting units 1115 of the input device 230, based on connection for communication with the input device 230.

For example, the first electronic device 210 may activate a sensor circuit 1155 (e.g., a camera (e.g., the camera 330 of FIG. 3) and/or a distance measurement sensor (e.g., the distance measurement sensor 341 in FIG. 3) (or an illuminance sensor (e.g., the illuminance sensor 343 of FIG. 3)) for receiving an optical signal emitted through the plurality of light-emitting units 1115 of the input device 230. The first electronic device 210 may receive optical signals emitted through the plurality of light-emitting units 1115 of the input device 230 by using the activated sensor circuit 1155. The second electronic device 220 may also activate a sensor circuit 1160 (e.g., a camera and/or a distance measurement sensor (or an illuminance sensor)) for receiving optical signals emitted through the plurality of light-emitting units 1115 of the input device 230. The second electronic device 220 may receive optical signals emitted through the plurality of light-emitting units 1115 of the input device 230 by using the activated sensor circuit 1160.

An optical signal (e.g., an IR signal) according to an embodiment may have a unique field of view (FOV). Accordingly, when the input device 230 is perpendicular to the sensor circuits 1155 and 1160 included in the first electronic device 210 and the second electronic device 220, the amount of light may be greater than the specified amount of light. The disclosure is not limited thereto, and the form (or shape) of the optical signals received by the sensor circuits 1155 and 1160 included in the first electronic device 210 and the second electronic device 220 may vary according to the arrangement state between the sensor circuits 1155 and 1160 included in the first electronic device 210 and the second electronic device 220.

In an embodiment, the input device 230 may move (1165) from the first location (e.g., located in front of the first electronic device 210) to the second location (e.g., located in front of the second electronic device 220). As the input device 230 moves (1165), the form (or shape) of the optical signals received by the sensor circuits 1155 and 1160 included in the first electronic device 210 and the second electronic device 220 may be changed. For example, based on the input device 230 moving from the first location (e.g., located in front of the first electronic device 210) to the second location (e.g., located in front of the second electronic device 220), the first electronic device 210 may receive an optical signal having a first form 1170 at a first time point and an optical signal having a second form 1175 at a second time point. In addition, based on the input device 230 moving (1165) from the first location (e.g., located in front of the first electronic device 210) to the second location (e.g., located in front of the second electronic device 220), the second electronic device 220 may receive an optical signal having a third form 1180 at a third time point and an optical signal having a fourth form 1185 at a fourth time point.

In an embodiment, the first electronic device 210 may transmit information including the optical signal of the first form 1170 received at the first time point and the optical signal of the second form 1175 received at the second time point to the second electronic device 220. The second electronic device 220 may transmit the optical signal of the third form 1180 received at the third time point and the optical signal of the fourth form 1185 received at the fourth time point to the first electronic device 210.

In an embodiment, the first electronic device 210 may estimate the movement (e.g., the direction of movement) of the input device 230 based on the optical signal of the first form 1170 received at the first time point, the optical signal of the second form 1175 received at the second time point, the third form 1180 received at the third time point, and the fourth form 1185 received at the fourth time point. The first electronic device 210 may estimate that the input device 230 moves 1165 from the first location (e.g., located in front of the first electronic device 210) to the second location (e.g., located in front of the second electronic device 220, and identify that the second electronic device 220 is disposed on the right side (e.g., disposed in the direction ①) with respect to the first electronic device 210.

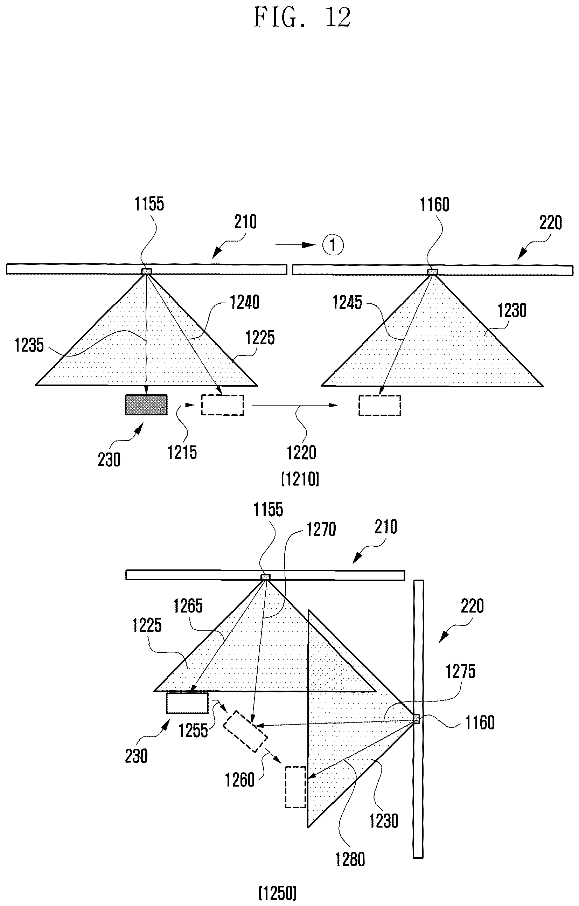

FIG. 12 is a diagram illustrating a method of identifying the relative location of a second electronic device 220 with respect to a first electronic device 210, according to an embodiment of the disclosure.

In various embodiments, the first electronic device 210 (e.g., the first electronic device 210 of FIG. 2), the second electronic device (e.g., the second electronic device 220 of FIG. 2), and the input device (e.g., the input device 230 of FIG. 2) may be connected to each other for communication through designated communication (e.g., short-range communication).

Referring to reference numeral <1210> of FIG. 12, the first electronic device 210 and the second electronic device 220 may detect (or track or receive) optical signals emitted through the plurality of light-emitting units (e.g., a plurality of light-emitting units 1115 of FIG. 11) of the input device 230, based on connection for communication with the input device 230.

In an embodiment, the first electronic device 210 and the second electronic device 220 may activate sensor circuits 1155 and 1160 (e.g., a camera, a distance measurement sensor, and/or an illuminance sensor) for detecting an optical signal emitted through a plurality of light-emitting units 1115 of the input device 230. For example, the sensor circuit 1155 of the first electronic device 210 may detect an optical signal emitted through the plurality of light-emitting units 1115 of the input device 230 in a first measurement area 1225 (e.g., a first FOV). The sensor circuit 1160 of the second electronic device 220 may detect an optical signal emitted through the plurality of light-emitting units 1115 of the input device 230 in a second measurement area 1230 (e.g., a second FOV).

As described above, the first electronic device 210 and the second electronic device 220 may have measurement areas (e.g., the first measurement area 1225 (e.g., the first FOV) and the second measurement area 1230 (e.g., the second FOV)) for detecting an optical signal through the sensor circuits 1155 and 1160. The form (or shape) of the optical signal received by the sensor circuits 1155 and 1160 included in the first electronic device 210 and the second electronic device 220 may vary according to the arrangement state of the sensor circuits 1155 and 1160 and the input device 230. Based on this, the first electronic device 210 may identify the arrangement angle with the second electronic device 220.

In an embodiment, the input device 230 may move (1215 and 1220) from the first location (e.g., located in front of the first electronic device 210) to the second location (e.g., located in front of the second electronic device 220). The first electronic device 210 may detect (1235) an optical signal that emits light while the input device 230 is located at the 1-1 location at the first time point, and detect (1240) an optical signal that emits light while the input device 230 is located at the 1-2 location at the second time point based on the movement (1215) of the input device 230. Based on the movement (1220) of the input device 230, the second electronic device 220 may detect (1245) an optical signal that emits light while the input device 230 is located at the 2-1 location at the third time point.

In an embodiment, the first electronic device 210 may transmit information on the 1-1 location of the input device 230 detecting the optical signal at the first time point and information on the 1-2 location of the input device 230 detecting the optical signal at the second time point to the second electronic device 220. The second electronic device 220 may transmit information on the 2-1 location of the input device 230 detecting the optical signal at a third time point to the first electronic device 210.

In an embodiment, the first electronic device 210 may compare information on the 1-1 location of the input device 230 detecting the optical signal at the first time point, information on the 1-2 location of the input device 230 detecting the optical signal at the second time point, and information on the 2-1 location of the input device 230 detecting the optical signal at the third time point in a timeline. Based on the result of the comparison in the timeline, the processor 360 may estimate that the input device 230 moves (1215 and 1220) from the first location (e.g., located in front of the first electronic device 210) to the second location (e.g., located in front of the second electronic device 220), and identify that the second electronic device 220 is disposed substantially parallel to the right direction (e.g., ①) direction) with respect to the first electronic device 210.

Referring to reference numeral <1250> of FIG. 12, the input device 230 may move (1255 and 1260) from the first location (e.g., located in front of the first electronic device 210) to the second location (e.g., located in front of the second electronic device 220. The first electronic device 210 may detect (1265) an optical signal that emits light while the input device 230 is located at the 1-3 location at the fourth time point. Based on the movement (1255) of the input device 230, the first electronic device 210 and the second electronic device 220 may detect (1270 and 1275) an optical signal that emits light while the input device 230 is located at the 1-4 location at the fifth time point. Based on the movement (1260) of the input device 230, the second electronic device 220 may detect (1280) an optical signal that emits light while the input device 230 is located at the 2-2 location at the sixth time point.

In an embodiment, the first electronic device 210 may transmit information on the 1-3 location of the input device 230 detecting the optical signal at the fourth time point and information on the 1-4 location of the input device 230 detecting the optical signal at the fifth time point to the second electronic device 220. The second electronic device 220 may transmit information on the 1-4 location of the input device 230 detecting the optical signal at the fifth time point and information on the 2-2 location of the input device 230 detecting the optical signal at the sixth time point to the first electronic device 210.

In an embodiment, the first electronic device 210 may compare information on the 1-3 location of the input device 230 detecting the optical signal at the fourth time point, information on the 1-4 location of the input device 230 detecting the optical signal at the fifth time point, and information on the 2-2 location of the input device 230 detecting the optical signal at the sixth time point in a timeline. Based on the result of the comparison in the timeline, the processor 360 may estimate that the input device 230 moves (1255 and 1260) from the first location (e.g., located in front of the first electronic device 210) to the second location (e.g., located in front of the second electronic device 220), and identify a state in which the second electronic device 220 is disposed at about 90 degrees with respect to the first electronic device 210.

In FIGS. 11 and 12 according to various embodiments, by estimating the angle (or location) at which the second electronic device 220 is disposed with respect to the first electronic device 210, the connection between the first screen to be displayed on the display (e.g., the display 351 of FIG. 3) of the first electronic device 210 and the second screen to be displayed on the second display 221 of FIG. 2 may be naturally established.

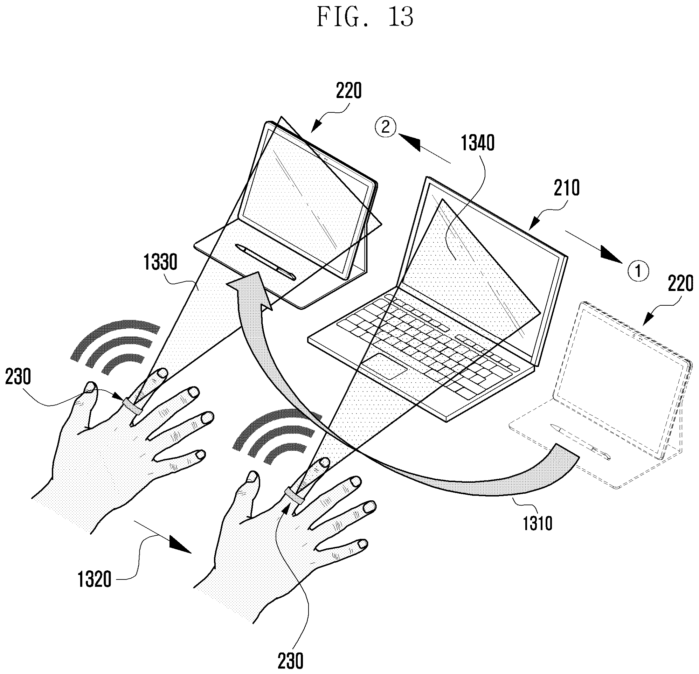

FIG. 13 is a diagram illustrating a method of controlling a screen by using an input device 230 of a first electronic device 210, according to an embodiment of the disclosure.

Referring to FIG. 13, while the second electronic device 220 is disposed on the right side (e.g., disposed in the direction ①) with respect to the first electronic device 210, the second electronic device 220 may be moved (1310) in a state disposed on the left side (e.g., disposed in the direction ②) with respect to the first electronic device 210. In an embodiment, the second electronic device 220 may obtain movement information (e.g., movement speed information, movement direction information, movement distance information, and/or inclination information) through a sensor circuit. The second electronic device 220 may transmit the movement information of the second electronic device 220 obtained through the sensor circuit to the first electronic device 210 and/or the input device 230.

In an embodiment, the input device 230 may emit an optical signal of a second designated pattern through the light-emitting unit of an optical sensor (e.g., the optical sensor 433 of FIG. 4), based on receiving movement information of the second electronic device 220 from the second electronic device 220. For example, the optical signal of the second designated pattern may differ from the optical signal of the designated pattern (e.g., a specific pattern, a specific period, and/or a specific length) described in FIGS. 6A to 12.

In an embodiment, when receiving movement information of the second electronic device 220 from the second electronic device 220, the input device 230 may determine to reconfigure the level (or arrangement) of the display (e.g., the display 351 of FIG. 3). Based on this, the input device 230 may notify the first electronic device 210 and/or the second electronic device 220 that the levels of the display 351 and the second display (e.g., the second display 221 of FIG. 2) are reconfigured by emitting the optical signal of the second designated pattern through the light-emitting unit.

For example, the input device 230 may emit an optical signal of the second designated pattern at a designated angle (e.g., about 10 to 20 degrees) 1330 by using the VCSEL at the first location (e.g., located in front of the second electronic device 220). The second electronic device 220 may receive an optical signal of the second designated pattern emitted at the designated angle 1330. In this case, the first electronic device 210 cannot receive the optical signal of the second designated pattern. The disclosure is not limited thereto, and even if the first electronic device 210 receives the optical signal of the second designated pattern, the optical signal may be less than or equal to a specific sensitivity, and in this case, the first electronic device 210 may process the optical signal as an invalid signal. In other words, the first electronic device 210 may not use the optical signal having a specific sensitivity or less to obtain location information of the input device 230.

In an embodiment, the first electronic device 210 may obtain third location information of the input device 230, based on the received optical signal of the second designated pattern. For example, the first electronic device 210 may obtain third location information related to the location of the input device 230, based on a timeline in which the optical signal of the second designated pattern is received from the input device 230.

In an embodiment, the input device 230 may move (1320) from the first location (e.g., located in front of the second electronic device 220) to the second location (e.g., located in front of the first electronic device 210). The input device 230 may emit an optical signal of the second designated pattern at a designated angle (e.g., about 10 to 20 degrees) 1340 by using the VCSEL at the first location (e.g., located in front of the first electronic device 210). The first electronic device 210 may receive an optical signal of the second designated pattern emitted at the designated angle 1340. In this case, the second electronic device 220 cannot receive the optical signal of the second designated pattern. The disclosure is not limited thereto, and even if the second electronic device 220 receives the optical signal of the second designated pattern, the optical signal may be less than or equal to a specific sensitivity, and in this case, the second electronic device 220 may process the optical signal as an invalid signal. In other words, the second electronic device 220 may not use the optical signal having a specific sensitivity or less to obtain location information of the input device 230.

In an embodiment, the second electronic device 220 may obtain fourth location information of the input device 230, based on the received optical signal of the second designated pattern. For example, the second electronic device 220 may obtain fourth location information related to the location of the input device 230, based on a timeline in which the optical signal of the second designated pattern is received from the input device 230. The second electronic device 220 may transmit the fourth location information of the input device 230 to the first electronic device 210. For example, the second electronic device 220 may transmit information related to a timeline in which the second electronic device 220 receives an optical signal from the input device 230 to the first electronic device 210.

In an embodiment, the first electronic device 210 may compare the third location information of the input device 230 with the fourth location information of the input device 230 received from the second electronic device 220 in a timeline to identify the relative location of the second electronic device 220 with respect to the first electronic device 210. For example, the first electronic device 210 may estimate that the input device 230 moves (1320) from the first location (e.g., located in front of the second electronic device 220) to the second location (e.g., located in front of the first electronic device 210), and identify that the second electronic device 220 is disposed on the left side (e.g., disposed in the direction ②) with respect to the first electronic device 210.

In an embodiment, the first electronic device 210 may reconfigure the levels (e.g., may reconfigure a display arrangement) of the display 351 of the first electronic device 210 and the second display 221 of the second electronic device 220, based on the identified relative location of the second electronic device 220. For example, the first electronic device 210 may configure the second display 221 of the second electronic device 220 as a primary display, and configure the display 351 of the first electronic device 210 as a secondary display, based on the estimation that the input device 230 moves (1320) from the first location (e.g., located in front of the second electronic device 220) to the second location (e.g., located in front of the first electronic device 210).

In an embodiment, based on reconfiguring the levels of the display 351 of the first electronic device 210 and the second display 221 of the second electronic device 220, the first electronic device 210 may identify information on the distance to the second electronic device 220 and/or depth information. The first electronic device 210 may reconfigure the display properties on the screen to be displayed on the display 351 and the second display 221 of the second electronic device 220, based on the identified information on the distance to the second electronic device 220 and/or depth information. For example, the display properties may include the resolution, scanning rate, brightness of the display (e.g., the display 351 and the second display 221), and/or the size of at least one object constituting a screen. The first electronic device 210 may display a screen on each of the display 351 and the second display 221 of the second electronic device 220, based on the reconfigured display properties.

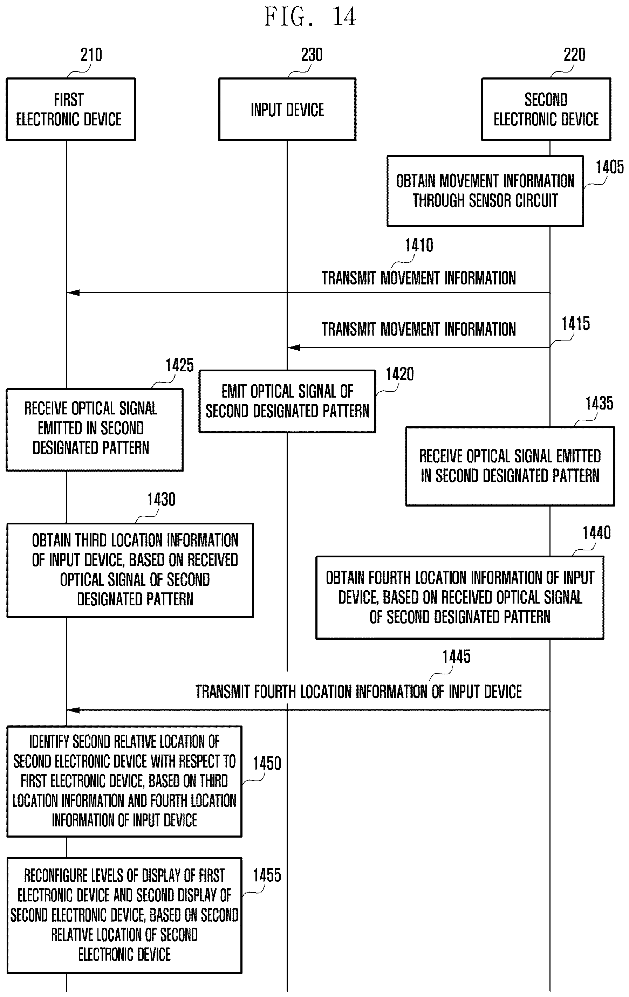

FIG. 14 is a diagram illustrating signal flow between a first electronic device 210, an input device 230, and a second electronic device 220, according to an embodiment of the disclosure.

In the following embodiment, each operation may be performed in sequence, but is not necessarily performed in sequence. For example, the order of each operation may be changed, and at least two operations may be performed in parallel.

FIG. 14 according to various embodiments may be an additional operation of FIG. 10 described above.

Referring to FIG. 14, in operation 1405, the second electronic device 220 may obtain movement information through a sensor circuit. The sensor circuit may include a motion sensor and/or a 9-axis sensor (e.g., a geomagnetic sensor, an acceleration sensor, and/or a gyro sensor). The second electronic device 220 may obtain movement speed information, movement direction information, movement distance information, and/or inclination information of the second electronic device 220 through the sensor circuit. However, the disclosure is not limited thereto.

In an embodiment, in operation 1410, the second electronic device 220 may transmit the movement information of the second electronic device 220 obtained through the sensor circuit to the first electronic device 210. In operation 1415, the second electronic device 220 may transmit the movement information of the second electronic device 220 obtained through the sensor circuit to the input device 230.

In an embodiment, based on receiving movement information of the second electronic device 220 from the second electronic device 220, the input device 230 may emit the optical signal of the second designated pattern through the light-emitting unit of an optical sensor (e.g., the optical sensor 433 of FIG. 4) in operation 1420. For example, when receiving the movement information of the second electronic device 220 from the second electronic device 220, the input device 230 may determine to reconfigure the levels of the display (e.g., the display 351 of FIG. 3) and the second display (e.g., the second display 221 of FIG. 2). Based on this, the input device 230 may cause the first electronic device 210 (or the second electronic device 220) to reconfigure the level of the display 351 (and the second display 221) by emitting the optical signal of the second designated pattern through the light-emitting unit.

In an embodiment, in operation 1425, the first electronic device 210 may receive an optical signal emitted in a second designated pattern from the input device 230. Although not illustrated, the first electronic device 210 may store time information on a time point at which an optical signal emitted in the second designated pattern is received from the input device 230 in a memory (e.g., the memory 320 of FIG. 3). In operation 1430, the first electronic device 210 may obtain third location information of the input device 230, based on the received optical signal of the second designated pattern. For example, the first electronic device 210 may obtain third location information related to the location of the input device 230, based on a timeline in which the optical signal of the second designated pattern is received from the input device 230.

In an embodiment, in operation 1435, the second electronic device 220 may receive an optical signal emitted in a second designated pattern from the input device 230. Although not illustrated, the second electronic device 220 may store time information on a time point at which an optical signal emitted in the second designated pattern is received from the input device 230 in a memory. In operation 1440, the second electronic device 220 may obtain fourth location information of the input device 230, based on the received optical signal of the second designated pattern. For example, the second electronic device 220 may obtain fourth location information related to the location of the input device 230, based on a timeline in which the optical signal of the second designated pattern is received from the input device 230. In operation 1445, the second electronic device 220 may transmit the fourth location information of the input device 230 to the first electronic device 210.

In an embodiment, in operation 1450, the first electronic device 210 may identify the second relative location of the second electronic device 220 with respect to the first electronic device 210, based on the third location information and the fourth location information of the input device 230. For example, the first electronic device 210 may compare the third location information with the fourth location information of the input device 230 in a timeline, and estimate the location and/or movement of the input device 230 based on the comparison result. In operation 1455, the first electronic device 210 may reconfigure the levels of the display 351 of the first electronic device 210 and the second display 221 of the second electronic device 220, based on the second relative location of the second electronic device 220.

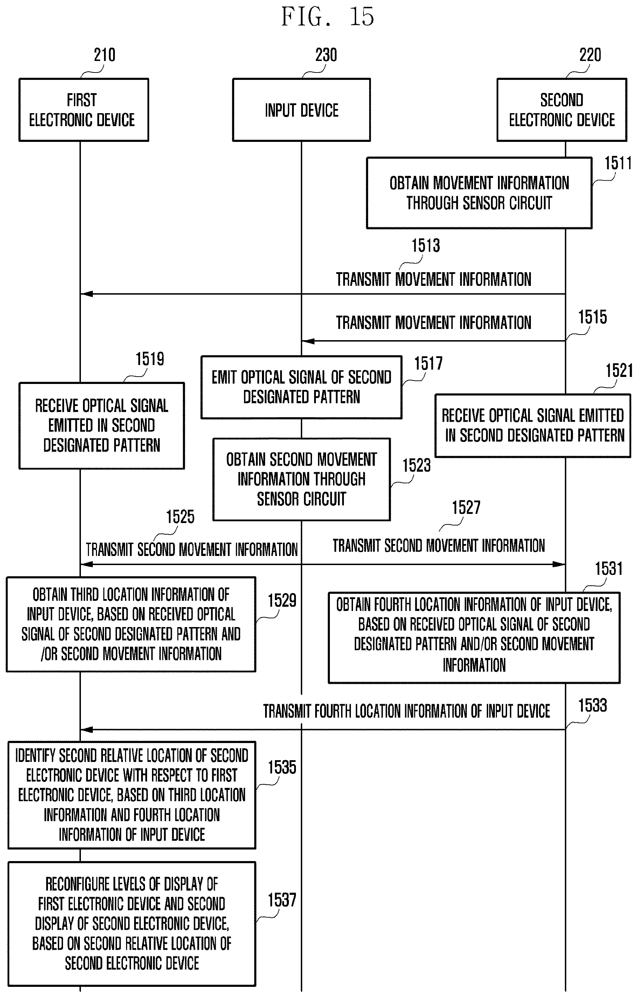

FIG. 15 is a diagram illustrating signal flow between a first electronic device 210, an input device 230, and a second electronic device 220, according to an embodiment of the disclosure.

In the following embodiment, each operation may be performed in sequence, but is not necessarily performed in sequence. For example, the order of each operation may be changed, and at least two operations may be performed in parallel.

Referring to FIG. 15, in operation 1511, the second electronic device 220 may obtain movement information through a sensor circuit. The sensor circuit may include a motion sensor and/or a 9-axis sensor (e.g., a geomagnetic sensor, an acceleration sensor, and/or a gyro sensor). The second electronic device 220 may obtain movement speed information, movement direction information, movement distance information, and/or inclination information of the second electronic device 220 through the sensor circuit.

In an embodiment, in operation 1513, the second electronic device 220 may transmit the movement information of the second electronic device 220 obtained through the sensor circuit to the first electronic device 210. In operation 1515, the second electronic device 220 may transmit the movement information of the second electronic device 220 obtained through the sensor circuit to the input device 230.

In an embodiment, based on receiving movement information of the second electronic device 220 from the second electronic device 220, the input device 230 may emit the optical signal of the second designated pattern through the light-emitting unit of an optical sensor (e.g., the optical sensor 433 of FIG. 4) in operation 1517. In operation 1519, the first electronic device 210 may receive the optical signal emitted in the second designated pattern from the input device 230. Although not illustrated, the first electronic device 210 may store time information at a time point at which the optical signal emitted in the second designated pattern is received from the input device 230 in a memory (e.g., the memory 320 of FIG. 3). In operation 1521, the second electronic device 220 may receive the optical signal emitted in the second designated pattern from the input device 230. Although not illustrated, the second electronic device 220 may store time information at a time point at which the optical signal emitted in the second designated pattern is received from the input device 230 in a memory (e.g., the memory 320 of FIG. 3).

In an embodiment, in operation 1523, the input device 230 may obtain second movement information of the input device 230 through a sensor circuit (e.g., the sensor circuit 430 of FIG. 4) (e.g., the inertial sensor 431 of FIG. 4). For example, the second movement information of the input device 230 may include movement speed information, movement direction information, movement distance information, and/or inclination information of the input device 230. However, the disclosure is not limited thereto. In operation 1525, the input device 230 may transmit the obtained second movement information (e.g., movement speed information, movement direction information, movement distance information, and/or inclination information) to the first electronic device 210. In operation 1527, the input device 230 may transmit the obtained second movement information (e.g., movement speed information, movement direction information, movement distance information, and/or inclination information) to the second electronic device 220.

In an embodiment, in operation 1529, the first electronic device 210 may obtain third location information of the input device 230, based on the optical signal of the second designated pattern and/or the second movement information received from the input device 230. For example, the first electronic device 210 may obtain third location information of the input device 230, based on a timeline receiving the optical signal of the second designated pattern from the input device 230 and/or second movement information for each timeline. In operation 1531, the second electronic device 220 may obtain fourth location information of the input device 230, based on the optical signal of the second designated pattern and/or the second movement information received from the input device 230. For example, the second electronic device 220 may obtain the fourth location information of the input device 230, based on the timeline receiving the optical signal of the second designated pattern from the input device 230 and/or second movement information for each timeline. In operation 1533, the second electronic device 220 may transmit the fourth location information of the input device 230 to the first electronic device 210.

In an embodiment, in operation 1535, the first electronic device 210 may identify the second relative location of the second electronic device 220 with respect to the first electronic device 210, based on the third location information and the fourth location information of the input device 230. For example, the first electronic device 210 may compare the third location information with the fourth location information of the input device 230 in a timeline, and estimate the location and/or movement of the input device 230 based on the comparison result. For example, the first electronic device 210 may estimate a movement direction according to the movement of the input device 230, for example, the movement direction in which the input device 230 located in front of the first electronic device 210 moves to the second electronic device 220, or the movement direction in which the input device 230 located in front of the second electronic device 220 moves to the first electronic device 210.

In an embodiment, in operation 1537, the first electronic device 210 may reconfigure the levels of the display (e.g., the display 351 of FIG. 3) of the first electronic device 210 and the second display (e.g., the second display 221 of FIG. 2) of the second electronic device 220, based on the second relative location of the second electronic device 220.

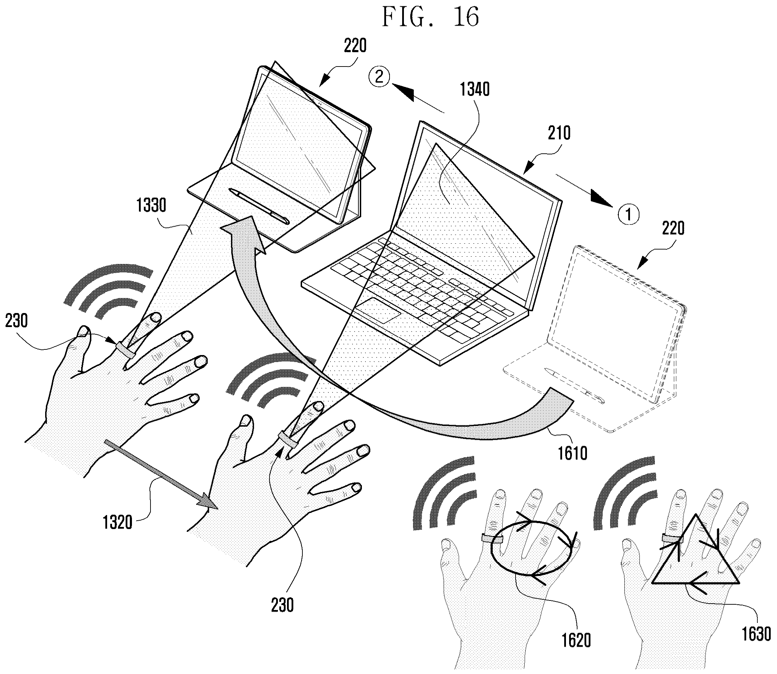

FIG. 16 is a diagram illustrating a method of reconfiguring the level of a display 351 of a first electronic device 210 and a second display 221 of a second electronic device 220, according to an embodiment of the disclosure.

Referring to FIG. 16, while the second electronic device 220 is disposed on the right side (e.g., disposed in the direction ①) with respect to the first electronic device 210, the second electronic device 220 may be moved (1610) in a state disposed on the left side (e.g., disposed in the direction ②) with respect to the first electronic device 210. The first electronic device 210 (or the second electronic device 220) may receive a specific gesture from the input device 230. In an embodiment, the specific gesture may be a trigger gesture for reconfiguring the level of the display (e.g., the display 351 of FIG. 3). For example, the specific gesture may include a gesture 1620 for drawing a circle and/or a gesture 1630 for drawing a triangle.

The disclosure is not limited thereto, and the input device 230 may obtain movement information (e.g., movement speed information, movement direction information, movement distance information, and/or inclination information) of the input device 230 through an inertial sensor (e.g., the inertial sensor 431 of FIG. 4). For example, the input device 230 may transmit the movement information of the input device 230 obtained through the inertial sensor 431 to the first electronic device 210 and/or the second electronic device 220.

In an embodiment, the first electronic device 210 and/or the second electronic device 220 may detect a specific gesture, based on movement information of the input device 230 received from the input device 230. The first electronic device 210 and/or the second electronic device 220 may determine a mode for reconfiguring the level of the display (e.g., the display 351 of FIG. 3 (and/or the second display (the second display 221 of FIG. 2))) based on detecting the specific gesture.

In an embodiment, the input device 230 may emit an optical signal of the second designated pattern at a designated angle (e.g., about 10 to 20 degrees) 1330 by using the VCSEL at the first location (e.g., located in front of the second electronic device 220). The second electronic device 220 may receive an optical signal of the second designated pattern emitted at the designated angle 1330. The first electronic device 210 may obtain third location information of the input device 230, based on the received optical signal of the second designated pattern. For example, the first electronic device 210 may obtain third location information related to the location of the input device 230, based on a timeline in which the optical signal of the second designated pattern is received from the input device 230.

In an embodiment, the input device 230 may move (1320) from the first location (e.g., located in front of the second electronic device 220) to the second location (e.g., located in front of the first electronic device 210). The input device 230 may emit an optical signal of the second designated pattern at a designated angle (e.g., about 10 to 20 degrees) 1340 by using the VCSEL at the second location (e.g., located in front of the first electronic device 210). The second electronic device 220 may receive an optical signal of the second designated pattern emitted at the designated angle 1340. The second electronic device 220 may obtain fourth location information of the input device 230, based on the received optical signal of the second designated pattern. For example, the second electronic device 220 may obtain fourth location information related to the location of the input device 230, based on a timeline in which the optical signal of the second designated pattern is received from the input device 230. The second electronic device 220 may transmit the fourth location information of the input device 230 to the first electronic device 210. For example, the second electronic device 220 may transmit information related to a timeline in which the second electronic device 220 receives an optical signal from the input device 230 to the first electronic device 210.

In an embodiment, the first electronic device 210 may compare the third location information of the input device 230 with the fourth location information of the input device 230 received from the second electronic device 220 in a timeline to identify the relative location of the second electronic device 220 with respect to the first electronic device 210. For example, the first electronic device 210 may estimate that the input device 230 moves (1320) from the first location (e.g., located in front of the second electronic device 220) to the second location (e.g., located in front of the first electronic device 210), and identify that the second electronic device 220 is disposed on the left side (e.g., disposed in the direction ②) with respect to the first electronic device 210.

In an embodiment, the first electronic device 210 may reconfigure the levels of the display 351 of the first electronic device 210 and the second display 221 of the second electronic device 220, based on the identified relative location of the second electronic device 220.

For example, after detecting the specific gesture 1620 or 1630, the first electronic device 210 may reconfigure the second display 221 of the second electronic device 220 as a primary display, and reconfigure the display 351 of the first electronic device 210 as a secondary display, based on the estimation that the input device 230 moves (1320) from the first location (e.g., located in front of the second electronic device 220) to the second location (e.g., located in front of the first electronic device 210).

In an embodiment, based on reconfiguring the levels of the display 351 of the first electronic device 210 and the second display 221 of the second electronic device 220, the first electronic device 210 may identify information on the distance to the second electronic device 220 and/or depth information. The first electronic device 210 may reconfigure the display properties on the screen to be displayed on the display 351 and the second display 221 of the second electronic device 220, based on the identified information on the distance to the second electronic device 220 and/or depth information. The first electronic device 210 may display a screen on each of the display 351 and the second display 221 of the second electronic device 220, based on the reconfigured display properties.

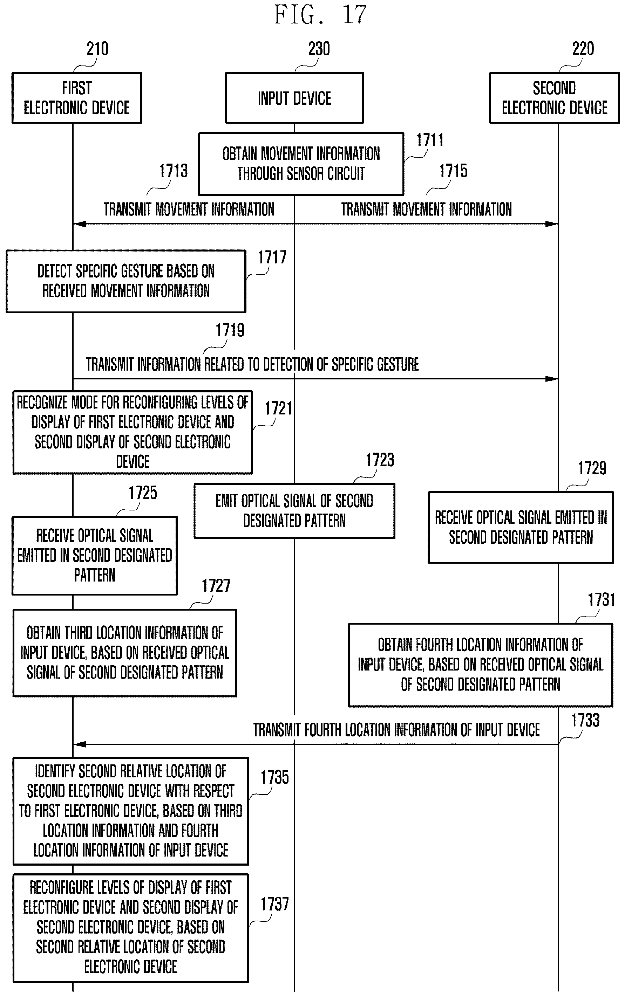

FIG. 17 is a diagram illustrating signal flow between a first electronic device 210, an input device 230, and a second electronic device 220, according to an embodiment of the disclosure.

In the following embodiment, each operation may be performed in sequence, but is not necessarily performed in sequence. For example, the order of each operation may be changed, and at least two operations may be performed in parallel.

Referring to FIG. 17, in operation 1711, the input device 230 may obtain information related to the movement of the input device 230 by using an inertial sensor (e.g., the inertial sensor 431 of FIG. 4) of a sensor circuit (e.g., the sensor circuit 430 of FIG. 4). For example, information related to the movement of the input device 230 may include movement speed information, movement direction information, movement distance information, and/or inclination information of the input device 230. In operation 1713, the input device 230 may transmit information related to the movement of the input device 230 obtained through the sensor circuit 430 to the first electronic device 210. In operation 1715, the input device 230 may transmit information related to the movement of the input device 230 obtained through the sensor circuit 430 to the second electronic device 220.

In an embodiment, in operation 1717, the first electronic device 210 may detect a specific gesture (e.g., a gesture 1620 for drawing a circle of FIG. 16 and/or a gesture 1630 for drawing a triangle) based on the movement information received from the input device 230. In operation 1719, the first electronic device 210 may transmit information related to detection of the specific gesture to the second electronic device 220. In operation 1721, the first electronic device 210 may recognize the mode as a mode for reconfiguring the level of the display (e.g., the display 351 of FIG. 3) of the first electronic device 210 and/or the second display 221 of the second electronic device 220 (e.g., the second display 221 of FIG. 2). The second electronic device 220 may also recognize the mode as a mode for reconfiguring the level of the display 351 and/or the second display 221 of the second electronic device 220 by receiving information related to the detection of the specific gesture from the first electronic device 210.

In an embodiment, although not illustrated, the second electronic device 220 may detect a specific gesture, based on movement information received from the input device 230. In this case, the above-described operation 1719 may be omitted.

In an embodiment, in operation 1723, the input device 230 may emit a signal of a second designated pattern. For example, the input device 230 may emit the optical signal of the second designated pattern through the light-emitting unit of an optical sensor (e.g., the optical sensor 433 of FIG. 4).

In an embodiment, in operation 1725, the first electronic device 210 may receive the optical signal emitted in the second designated pattern from the input device 230. Although not illustrated, the first electronic device 210 may store time information at a time point at which the optical signal emitted in the second designated pattern is received from the input device 230 in a memory (e.g., the memory 320 of FIG. 3). In operation 1727, the first electronic device 210 may obtain third location information of the input device 230, based on the received optical signal of the second designated pattern.

In an embodiment, in operation 1729, the second electronic device 220 may receive the optical signal emitted in the second designated pattern from the input device 230. Although not illustrated, the second electronic device 220 may store time information at a time point at which the optical signal emitted in the second designated pattern is received from the input device 230 in a memory. In operation 1731, the second electronic device 220 may obtain fourth location information of the input device 230, based on the received optical signal of the second designated pattern. In operation 1733, the second electronic device 220 may transmit the fourth location information of the input device 230 to the first electronic device 210.

In an embodiment, in operation 1735, the first electronic device 210 may identify the second relative location of the second electronic device 220 with respect to the first electronic device 210, based on the third location information and the fourth location information of the input device 230. For example, the first electronic device 210 may compare the third location information with the fourth location information in a timeline, and estimate the location and/or movement of the input device 230 based on the comparison result. In operation 1737, the first electronic device 210 may reconfigure the levels of the display 351 of the first electronic device 210 and the second display 221 of the second electronic device 220, based on the second relative location of the second electronic device 220.

In FIGS. 13 to 17 according to various embodiments, the first electronic device 210 may recognize a mode for reconfiguring the levels of the display 351 and the second display 221 of the second electronic device 220, based on movement information of the second electronic device 220 and/or a specific gesture input by the input device 230. Accordingly, the first electronic device 210 may provide the user with the ability to easily reconfigure the levels of the display 351 and the second display 221.

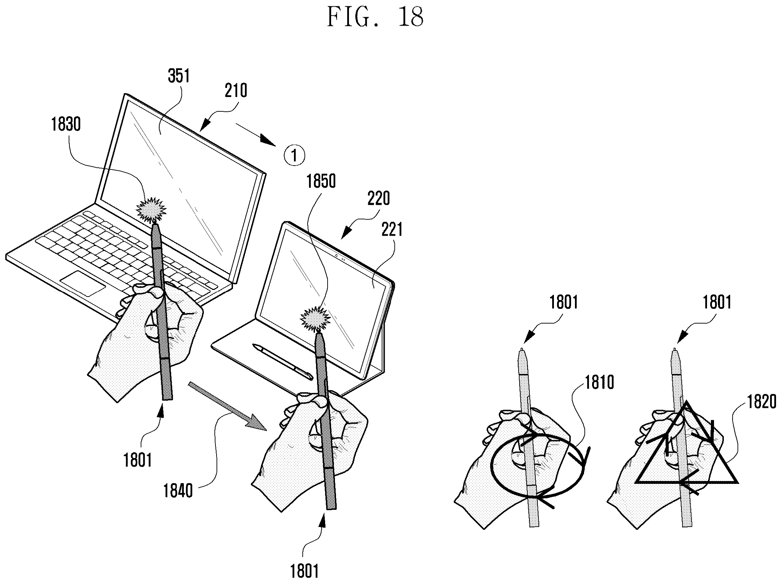

In FIGS. 2 to 17 according to various embodiments, although the input device 230 has been described as a smart ring that may be worn on a part of a body (e.g., a finger), the disclosure is not limited thereto. For example, the input device 230 may include an electronic pen. In this regard, various embodiments will be described in FIG. 18 described later.

FIG. 18 is a diagram illustrating a method of configuring the level of a display 351 of a first electronic device 210 and a second display 221 of a second electronic device 220, according to an embodiment of the disclosure.

In various embodiments, a first electronic device (e.g., the first electronic device 210 of FIG. 2), a second electronic device (e.g., the second electronic device 220 of FIG. 2), and an electronic pen 1801 may be connected to each other for communication through designated communication (e.g., short-range communication).

Referring to FIG. 18, the electronic pen 1801 may touch (1830) the display (e.g., the display 351 of FIG. 3) of the first electronic device 210, move to the right direction 1840, and then touch (1850) the second display (e.g., the second display 221 of FIG. 2) of the second electronic device 220. For example, the first electronic device 210 may detect the first touch input 1830 by the electronic pen 1801 on the display 351. The first electronic device 210 may store first time information on the first touch input 1830 and the time point at which the first touch input 1830 is detected in a memory (e.g., the memory 320 of FIG. 3). The second electronic device 220 may detect the second touch input 1850 by the electronic pen 1801 on the second display 221. The second electronic device 220 may store second time information on the second touch input 1850 and the time point at which the second touch input 1850 is detected in the memory.

In an embodiment, the first electronic device 210 and the second electronic device 220 may exchange (e.g., first time information on the first touch input 1830 and the time point at which the first touch input 1830 is detected and second time information on the second touch input 1850 and the time point at which the second touch input 1850 is detected are exchanged) information related to the touch input detected by the electronic pen 1801.

**In** an embodiment, the first electronic device 210 may estimate the movement, for example, the direction of movement of the electronic pen 1801, based on the first time information on the first touch input 1830 and the first time point at which the first touch input 1830 is detected and second time information on the second touch input 1850 and the second time point at which the second touch input 1850 is detected. For example, the first electronic device 210 may estimate that the electronic pen 1801 has moved to the right direction (e.g., direction ①), based on the first touch input 1830 detected at the first time point and the second touch input 1850 detected at the second time point. The first electronic device 210 may identify that the second electronic device 220 is disposed in the right direction (e.g., direction ①) with respect to the first electronic device 210, based on the estimation that the electronic pen 1801 has moved in the right direction (e.g., direction ①).

In an embodiment, the first electronic device 210 may configure the display 351 of the first electronic device 210 as the primary display and configure the second display 221 of the second electronic device 220 as the secondary display, based on the fact that the second electronic device 220 is disposed in the right direction (e.g., direction ①) with respect to the first electronic device 210.

In an embodiment, the electronic pen 1801 may obtain movement information of the electronic pen 1801 through a sensor circuit and transmit the movement information to the first electronic device 210 and/or the second electronic device 220. The first electronic device 210 and/or the second electronic device 220 may detect a specific gesture, based on the movement information of the electronic pen 1801 received from the input device 230. For example, in an embodiment, the specific gesture is a trigger gesture for reconfiguring the level of the display 351 and may include, for example, a gesture 1810 for drawing a circle and/or a gesture 1820 for drawing a triangle.

In an embodiment, the first electronic device 210 and/or the second electronic device 220 may determine a mode for reconfiguring the level of the display (e.g., the display 351 of FIG. 3 (and/or the second display (the second display 221 of FIG. 2))) based on detecting the specific gesture. Thereafter, as described above, based on the touch input of the touch pen 1801 detected on the display 351 of the first electronic device 210 and the second display 221 of the second electronic device 220, the first electronic device 210 may estimate, for example, a movement direction of the electronic pen 1801. The first electronic device 210 may reconfigure the levels of the display 351 of the first electronic device 210 and the second display 221 of the second electronic device 220 based on the estimated movement of the electronic pen 1801, for example, a movement direction.

In FIG. 18 according to various embodiments, although it has been described as identifying the relative location of the second electronic device 220, based on the touch input of the electronic pen 1801 detected on the display 351 of the first electronic device 210 and the display 221 of the second electronic device 220, the disclosure is not limited thereto. For example, the electronic pen 1801 may include a light-emitting unit. For example, the light-emitting unit may be disposed in an area where the pen tip is formed to output an optical signal of a designated pattern. However, the disclosure is not limited thereto. The first electronic device 210 and the second electronic device 220 may receive an optical signal output from the light-emitting unit of the electronic pen 1801 to identify the relative location of the second electronic device 220. The method of receiving light output from the pen tip by the first electronic device 210 and identifying the relative location of the second electronic device 220 may be substantially the same as the method described in FIGS. 2 to 17 above, in which the first electronic device 210 receives the optical signal of the designated pattern output from the light-emitting unit of the input device 230 (e.g., a wearable electronic device) to identify the relative location of the second electronic device 220.

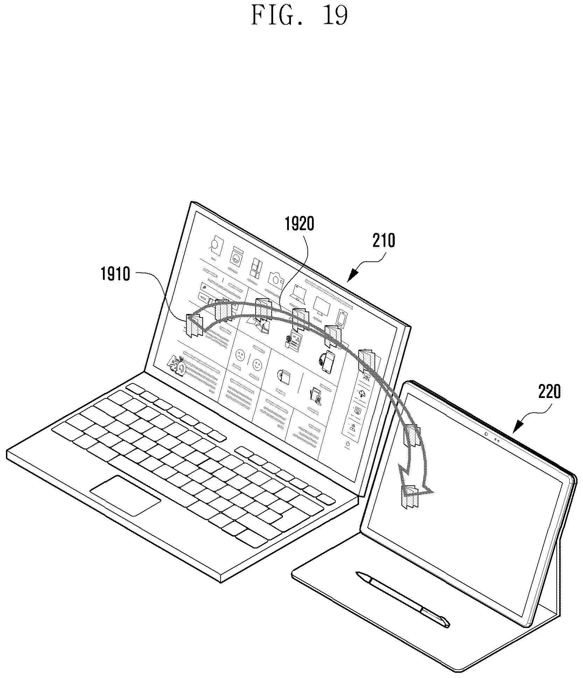

FIG. 19 is a diagram illustrating a method of controlling a screen by using an input device 230 of a first electronic device 210, according to an embodiment of the disclosure.

Referring to FIG. 19, the first display (e.g., the display 351 of FIG. 3) of the first electronic device 210 may be configured as a primary display, and the second display (e.g., the second display 221 of FIG. 2) of the second electronic device 220 may be configured as a secondary display. In this case, the first electronic device 210 may detect an input for moving (1920) a specific object 1910 displayed on the first display 351 of the first electronic device 210 to the second display 221 of the second electronic device 220. For example, based on the movement information of the input device 230, the input for moving (1920) the specific object 1910 to the second display 221 of the second electronic device 220 may be detected. However, the disclosure is not limited thereto.

In an embodiment, based on detecting the input for moving (1920) the specific object 1910 displayed on the first display 351 of the first electronic device 210 to the second display 221 of the second electronic device 220, it is possible to provide a visual effect (e.g., an animation effect) of moving (1920) from the first display 351 of the first electronic device 210 to the second display 221 of the second electronic device 220. Accordingly, it is possible to intuitively express that the specific object 1910 is moving to the second display 221 of the second electronic device 220 by applying a visual effect such as the specific object 1910 flying to the right direction 1920.

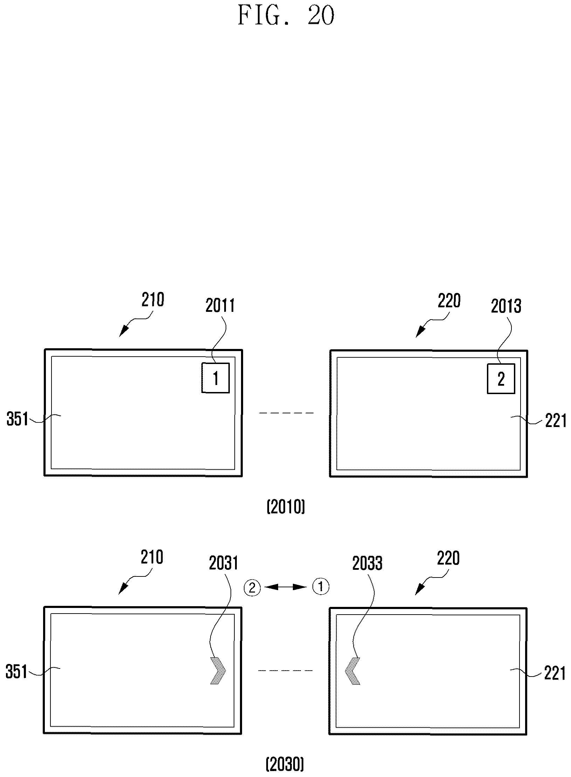

FIG. 20 is a diagram illustrating a user interface for the level of a display 351 of a first electronic device 210 and a second display 221 of a second electronic device 220, and a user interface indicating the relative location of the second electronic device 220 with respect to the first electronic device 210.

In an embodiment, as it is identified that the second electronic device (e.g., the second electronic device 220 of FIG. 2) is disposed in the right direction (e.g., direction ①) with respect to the first electronic device 210, the first electronic device (e.g., the first electronic device 210 of FIG. 2) may configure the display (e.g., the display 351 of FIG. 3) of the first electronic device 210 as a primary display, and may configure the second display (e.g., the second display 221 of FIG. 2) of the second electronic device 220 as a secondary display.

Referring to FIG. 20, as illustrated in reference numeral <2010>, the first electronic device 210 may control the display 351 to display the first indicator 2011 indicating that the display 351 is configured as the primary display on at least a partial area of the display 351, and control the second display 221 to display the second indicator 2013 indicating that the second display 221 is configured as the secondary display on at least a partial area of the second display 221.

The disclosure is not limited thereto, and as illustrated in reference numeral <2030>, the first electronic device 210 may display a third indicator 2031 indicating the direction in which the second electronic device 220 is disposed (e.g., direction ①) with respect to the first electronic device 210 on at least a partial area of the display 351. The second electronic device 220 may display a fourth indicator 2033 indicating the direction in which the first electronic device 210 is disposed (e.g., direction ②) with respect to the second electronic device 220 on at least a partial area of the second display 221.

In various embodiments, although not illustrated, when an optical signal emitted from the light-emitting unit of the input device 230 is detected on the display 351 of the first electronic device 210 or the second display 221 of the second electronic device 220, the first electronic device 210 may display a pointing object corresponding to the optical signal on the display 351 or the second display 221.

In FIGS. 2 to 20 according to various embodiments, it has been described that the first electronic device 210 is a subject, and the first electronic device 210 identifies the relative location of the second electronic device 220 with respect to the first electronic device 210, and based on this, configures the levels of the display 351 of the first electronic device 210 and the second display 221 of the second electronic device 220, but is not limited thereto. For example, the second electronic device 220 may be a subject, and the second electronic device 220 may identify the relative location of the first electronic device 210 with respect to the second electronic device 220, and based on this, configure the levels of the display 351 of the first electronic device 210 and the second display 221 of the second electronic device 220. In this case, the above-described operations of the first electronic device 210 may be performed in the second electronic device 220, and the operations of the second electronic device 220 may be performed in the first electronic device 210.

The method of controlling a screen using an input device 230 of the electronic device 210 according to an embodiment of the disclosure may include obtaining first location information related to the location of an input device 230 connected for communication through the communication circuit 310. The method of controlling a screen using an input device 230 of the electronic device 210 according to an embodiment may include receiving, from a second electronic device 220 connected for communication through the communication circuit 310, second location information related to the location of the input device 230 obtained by the second electronic device 220. The method of controlling a screen using an input device 230 of the electronic device 210 according to an embodiment may include identifying the relative location of the second electronic device 220 with respect to the electronic device 210, based on the obtained first location information related to the location of the input device 230 and the received second location information related to the location of the input device 230. The method of controlling a screen using an input device 230 of the electronic device 210 according to an embodiment may include configuring an arrangements of the display 351 of the electronic device 210 and the second display 221 of the second electronic device 220, based on the identified relative location of the second electronic device 220.

The obtaining of the first location information related to the location of an input device 230 according to an embodiment may include receiving an optical signal emitted in a designated pattern from the light-emitting unit of the input device 230 through the receiver of the distance measurement sensor 341. The obtaining of the first location information related to the location of an input device 230 according to an embodiment may include obtaining the first location information related to the location of the input device 230, based on at least one time information for time of receiving an optical signal of a designated pattern from the input device 230.

The obtaining of the first location information related to the location of an input device 230 according to an embodiment may include receiving information related to a movement of the input device 230 from the input device 230. The obtaining the first location information related to the location of the input device 230, based on at least one time information for time of receiving the information related to the movement of the input device 230.

The method of controlling a screen using an input device 230 of the electronic device 210 according to an embodiment may include storing, in a memory 320, the at least one time information for time of receiving an optical signal of a designated pattern from the input device 230 and the at least one time information for time of receiving the information related to the movement of the input device 230.

The obtaining of the first location information related to the location of an input device 230 according to an embodiment may include identifying the shape of the optical signal received through the receiver of the distance measurement sensor 341. The obtaining of the first location information related to the location of an input device 230 according to an embodiment may include obtaining the first location information related to the location of the input device 230, based on the shape of the received optical signal.

The identifying of the relative location of the second electronic device 220 with respect to the electronic device 210 according to an embodiment may include comparing at least one time information for time of obtaining the first location information with at least one time information for time of receiving the second location information. The identifying of the relative location of the second electronic device 220 with respect to the electronic device 210 according to an embodiment may include estimating at least one of the location and movement of the input device 230, based on the comparison results. The identifying of the relative location of the second electronic device 220 with respect to the electronic device 210 according to an embodiment may include identifying the relative location of the second electronic device 220 with respect to the electronic device 210, based on at least one of the estimated location and movement of the input device 230.

The method of controlling a screen using an input device 230 of the electronic device 210 according to an embodiment may include identifying at least one of information on the distance to the second electronic device 220 and depth information, based on the identified relative location of the second electronic device 220. The method of controlling a screen using an input device 230 of the electronic device 210 according to an embodiment may include configuring first display properties on the first screen to be displayed on the display 351 and configuring second display properties on the second screen to be displayed on the second display 221 of the second electronic device 220, based on at least one of information on the distance to the second electronic device 220 and depth information. The method of controlling a screen using an input device 230 of the electronic device 210 according to an embodiment may include displaying the first screen on the display 351 based on the configured first display properties, and displaying the second screen on the second display 221 of the second electronic device 220 based on the configured second display properties.

The method of controlling a screen using an input device 230 of the electronic device 210 according to an embodiment may include receiving information related to the movement of the second electronic device 220 from the second electronic device 220. The method of controlling a screen using an input device 230 of the electronic device 210 according to an embodiment may include receiving an optical signal emitted in a second designated pattern from the light-emitting unit of the input device 230 through the receiving unit of the distance measurement sensor 341. The method of controlling a screen using an input device 230 of the electronic device 210 according to an embodiment may include obtaining third location information related to the location of the input device 230, based on the received optical signal of the second designated pattern. The method of controlling a screen using an input device 230 of the electronic device 210 according to an embodiment may include receiving, from the second electronic device 220, fourth location information related to the location of the input device 230 obtained by the second electronic device 220. The method of controlling a screen using an input device 230 of the electronic device 210 according to an embodiment may include identifying the second relative location of the second electronic device 220 with respect to the electronic device 210, based on the third location information and the fourth location information related to the location of the input device 230. The method of controlling a screen using an input device 230 of the electronic device 210 according to an embodiment may include reconfiguring the arrangement of the display 351 of the electronic device 210 and the second display 221 of the second electronic device 220, based on the second relative location of the second electronic device 220.

The method of controlling a screen using an input device 230 of the electronic device 210 according to an embodiment may include receiving information related to a movement of the input device 230 from the input device 230. The method of controlling a screen using an input device 230 of the electronic device 210 according to an embodiment may include detecting a specific gesture based on the received information related to the movement of the input device 230. The method of controlling a screen using an input device 230 of the electronic device 210 according to an embodiment may include identifying a mode for reconfiguring the arrangement of the display 351 and the second display 221 of the second electronic device 220 based on detecting the specific gesture.

The method of controlling a screen using an input device 230 of the electronic device 210 according to an embodiment may include displaying an indicator indicating the relative location of the second electronic device 220 with respect to the electronic device 210 on at least a partial area of the display 351.

Examples relevant to the present disclosure are presented in the below paragraphs:

According to a first example, there is provided an electronic device (e.g., electronic device 210) comprising: a communication circuit; a display; and a processor operatively connected to the communication circuit and the display, wherein the processor is configured to: obtain first location information related to a location of an input device (e.g., input device 230) connected for communication through the communication circuit; receive, from a second electronic device (e.g., electronic device 220) connected for communication through the communication circuit, second location information related to a location of the input device obtained by the second electronic device; identify a relative location of the second electronic device with respect to the electronic device, based on the obtained first location information related to the location of the input device and the received second location information related to the location of the input device; and configure levels of the display and a second display of the second electronic device, based on the identified relative location of the second electronic device .

In a second example, the electronic device of the first example further comprises a distance measurement sensor, wherein the processor is further configured to: receive, through a receiver of the distance measurement sensor, an optical signal emitted in a designated pattern from a light-emitting unit of the input device; and obtain the first location information related to the location of the input device, based on a timeline receiving the optical signal of the designated pattern from the input device.

In a third example, in the electronic device of the second example, the processor is further configured to: receive information related to the movement of the input device from the input device; and obtain the first location information related to the location of the input device, based on at least one of the timeline receiving the optical signal of the designated pattern from the input device or the information related to the movement of the input device for each timeline.

In a fourth example, the electronic device of the third example further comprises a memory, and wherein the processor is configured to store, in the memory, a timeline receiving an optical signal of a designated pattern from the input device and information related to the movement of the input device for each timeline.

In a fifth example, in the electronic device of any of the second to fourth examples, the processor is further configured to: identify a shape of the optical signal received through the receiver of the distance measurement sensor; and obtain the first location information related to the location of the input device, based on the shape of the received optical signal for each timeline.

In a sixth example, in the electronic device of any of the first to fifth examples, the processor is further configured to: compare the first location information with the second location information in a timeline; estimate at least one of the location or movement of the input device, based on the comparison results; and identify the relative location of the second electronic device with respect to the electronic device, based on at least one of the estimated location or movement of the input device.

In a seventh example, in the electronic device of any of the first to sixth examples, the processor is further configured to: identify at least one of information on the distance to the second electronic device or depth information, based on the identified relative location of the second electronic device; configure first display properties on the first screen to be displayed on the display and configure second display properties on the second screen to be displayed on the second display of the second electronic device, based on at least one of information on the distance to the second electronic device or depth information; and display the first screen on the display based on the configured first display properties, and display the second screen on the second display of the second electronic device based on the configured second display properties.

In an eighth example, in the electronic device of the second example, the processor is further configured to: receive, from the second electronic device, information related to the movement of the second electronic device; receive, through the receiving unit of the distance measurement sensor, an optical signal emitted in a second designated pattern from the light-emitting unit of the input device; obtain, based on the optical signal of the second designated pattern, third location information related to the location of the input device; receive, from the second electronic device, fourth location information related to the location of the input device obtained by the second electronic device; identify, based on the third location information and the fourth location information, a second relative location of the second electronic device with respect to the electronic device; and reconfigure, based on the second relative location of the second electronic device, levels of the display of the electronic device and the second display of the second electronic device.

In a ninth example, in the electronic device of any of the first to seventh examples, the processor is further configured to: receive from the input device, information related to the movement of the input device; and identify a mode for reconfiguring the levels of the display and the second display of the second electronic device in case that a specific gesture has been detected, based on the received information related to the movement of the input device.

In a tenth example, in the electronic device of any of the first to ninth examples, the processor is further configured to display, on at least a partial area of the display, an indicator indicating the relative location of the second electronic device with respect to the electronic device .

In an eleventh example, a method of controlling a screen using an input device of an electronic device, comprises: obtaining first location information related to the location of an input device connected for communication through the communication circuit; receiving, from a second electronic device connected for communication through the communication circuit, second location information related to the location of the input device obtained by the second electronic device; identifying the relative location of the second electronic device with respect to the electronic device, based on the obtained first location information related to the location of the input device and the received second location information related to the location of the input device; and configuring levels of the display of the electronic device and the second display of the second electronic device, based on the identified relative location of the second electronic device.

In a twelfth example, in the method of the eleventh example, the obtaining of the first location information related to the location of an input device comprises: receiving an optical signal emitted in a designated pattern from the light-emitting unit of the input device through the receiver of the distance measurement sensor; and obtaining the first location information related to the location of the input device, based on a timeline receiving an optical signal of a designated pattern from the input device .

In a thirteenth example, in the method of the twelfth example, the obtaining of the first location information related to the location of an input device comprises: receiving information related to the movement of the input device from the input device; and obtaining the first location information related to the location of the input device, based on at least one of a timeline receiving an optical signal of a designated pattern from the input device or information related to the movement of the input device for each timeline.

In a fourteenth example, in the method of the thirteenth example, the method further comprises storing, in a memory, a timeline receiving an optical signal of a designated pattern from the input device and information related to the movement of the input device for each timeline.

In a fifteenth example, in the method of any of the twelfth to fourteenth examples, the obtaining of the first location information related to the location of an input device comprises: identifying the shape of the optical signal received through the receiver of the distance measurement sensor and obtaining the first location information related to the location of the input device, based on the shape of the received optical signal for each timeline.

In a sixteenth example, in the method of any of the eleventh to fifteen examples, identifying of the relative location of the second electronic device with respect to the electronic device comprises: comparing the first location information with the second location information in a timeline; estimating at least one of the location or movement of the input device, based on the comparison results; and identifying the relative location of the second electronic device with respect to the electronic device, based on at least one of the estimated location or movement of the input device.

In a seventeenth example, in the method of any of the eleventh to the sixteenth examples, the method further comprises: identifying at least one of information on the distance to the second electronic device or depth information, based on the identified relative location of the second electronic device; configuring first display properties on the first screen to be displayed on the display and configuring second display properties on the second screen to be displayed on the second display of the second electronic device, based on at least one of information on the distance to the second electronic device or depth information; and displaying the first screen on the display based on the configured first display properties, and displaying the second screen on the second display of the second electronic device based on the configured second display properties.

In an eighteenth example, the method of the twelfth example further comprises receiving information related to the movement of the second electronic device from the second electronic device; receiving an optical signal emitted in a second designated pattern from the light-emitting unit of the input device through the receiving unit of the distance measurement sensor; obtaining third location information related to the location of the input device , based on the received optical signal of the second designated pattern; receiving, from the second electronic device, fourth location information related to the location of the input device obtained by the second electronic device; identifying the second relative location of the second electronic device with respect to the electronic device, based on the third location information and the fourth location information; and reconfiguring levels of the display of the electronic device and the second display of the second electronic device, based on the second relative location of the second electronic device.

In a nineteenth example, the method of any of the eleventh to seventeenth examples further comprises receiving information related to the movement of the input device from the input device; and identifying a mode for reconfiguring the levels of the display and the second display of the second electronic device 220 in case that a specific gesture has been detected, based on the received information related to the movement of the input device.

In a twentieth example, the method of any of the eleventh to nineteenth examples, further comprises displaying an indicator indicating the relative location of the second electronic device with respect to the electronic device on at least a partial area of the display.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. Further examples of the disclosure provide subject matter in accordance with one or more of the following numbered paragraphs:
Paragraph 1. An electronic device (210) comprising: a communication circuit (310); a display (351); and a processor (360) operatively connected to the communication circuit (310) and the display (351), wherein the processor (360) is configured to: obtain first location information related to a location of an input device (230) connected for communication through the communication circuit (310); receive, from a second electronic device (220) connected for communication through the communication circuit (310), second location information related to a location of the input device (230) obtained by the second electronic device (220); identify a relative location of the second electronic device (220) with respect to the electronic device (210), based on the obtained first location information related to the location of the input device (230) and the received second location information related to the location of the input device (230); and configure an arrangement of the display (351) and a second display (221) of the second electronic device (220), based on the identified relative location of the second electronic device (220).
Paragraph 2. The electronic device of paragraph 1, wherein the electronic device (210) further comprises a distance measurement sensor (341), and wherein the processor (360) is further configured to: receive, through a receiver of the distance measurement sensor (341), an optical signal emitted in a designated pattern from a light-emitting unit of the input device (230); obtain the first location information related to the location of the input device (230), based on at least one time information for time of receiving the optical signal of the designated pattern from the input device (230).
Paragraph 3. The electronic device of paragraph 2, further comprising a memory (320), wherein the processor (360) is further configured to: receive information related to a movement of the input device (230) from the input device (230); obtain the first location information related to the location of the input device (230), based on at least one time information for time of receiving the information related to the movement of the input device (230); and store, in the memory (320), the at least one time information for time of receiving an optical signal of a designated pattern from the input device (230) and the at least one time information for time of receiving information related to the movement of the input device (230).
Paragraph 4. The electronic device of paragraph 2 or 3, wherein the processor (360) is further configured to: identify a shape of the optical signal received through the receiver of the distance measurement sensor (341); and obtain the first location information related to the location of the input device (230), based on the shape of the received optical signal.
Paragraph 5. The electronic device of any of paragraphs 1 to 4, wherein the processor (360) is further configured to: compare at least one time information for time of obtaining the first location information with at least one time information for time of receiving the second location information; estimate at least one of the location or movement of the input device (230), based on the comparison results; and identify the relative location of the second electronic device (220) with respect to the electronic device (210), based on at least one of the estimated location or movement of the input device (230).
Paragraph 6. The electronic device of any of paragraphs 1 to 5, wherein the processor (360) is further configured to: identify at least one of information on the distance to the second electronic device (220) or depth information, based on the identified relative location of the second electronic device (220); configure first display properties on the first screen to be displayed on the display (351) and configure second display properties on the second screen to be displayed on the second display (221) of the second electronic device (220), based on at least one of information on the distance to the second electronic device (220) or depth information; and display the first screen on the display (351) based on the configured first display properties, and display the second screen on the second display (221) of the second electronic device (220) based on the configured second display properties.
Paragraph 7. The electronic device of paragraph 2, wherein the processor (360) is further configured to: receive, from the second electronic device (220), information related to the movement of the second electronic device (220); receive, through the receiving unit of the distance measurement sensor (341), an optical signal emitted in a second designated pattern from the light-emitting unit of the input device (230); obtain, based on the optical signal of the second designated pattern, third location information related to the location of the input device (230); receive, from the second electronic device (220), fourth location information related to the location of the input device (230) obtained by the second electronic device (220); identify, based on the third location information and the fourth location information, a second relative location of the second electronic device (220) with respect to the electronic device (210); and reconfigure, based on the second relative location of the second electronic device (220), the arrangement of the display (351) of the electronic device (210) and the second display (221) of the second electronic device (220).
Paragraph 8. The electronic device of any of paragraphs 1 to 6, wherein the processor (360) is further configured to: receive from the input device (230), information related to a movement of the input device (230); detect a specific gesture based on the received information related to the movement of the input device (230); and identify a mode for reconfiguring the arrangement of the display (351) and the second display (221) of the second electronic device 220 based on detecting the specific gesture.
Paragraph 9. The electronic device of any of paragraphs 1 to 8, wherein the processor (360) is further configured to display, on at least a partial area of the display (351), an indicator indicating the relative location of the second electronic device (220) with respect to the electronic device (210) .
Paragraph 10. A method of controlling a screen using an input device (230) of an electronic device (210), the method comprising: obtaining first location information related to the location of an input device (230) connected for communication through the communication circuit (310); receiving, from a second electronic device (220) connected for communication through the communication circuit (310), second location information related to the location of the input device (230) obtained by the second electronic device (220); identifying the relative location of the second electronic device (220) with respect to the electronic device (210), based on the obtained first location information related to the location of the input device (230) and the received second location information related to the location of the input device (230); and configuring an arrangement of the display (351) of the electronic device (210) and the second display (221) of the second electronic device (220), based on the identified relative location of the second electronic device (220).
Paragraph 11. The method of paragraph 10, wherein the obtaining of the first location information related to the location of an input device (230) comprises: receiving an optical signal emitted in a designated pattern from the light-emitting unit of the input device (230) through the receiver of the distance measurement sensor (341); and obtaining the first location information related to the location of the input device (230), based on at least one time information for time of receiving an optical signal of a designated pattern from the input device (230), wherein the obtaining of the first location information related to the location of an input device (230) comprises: receiving information related to a movement of the input device (230) from the input device (230); obtaining the first location information related to the location of the input device (230), based on at least one time information for time of receiving the information related to the movement of the input device (230); and storing, in a memory (320), the at least one time information for time of receiving an optical signal of a designated pattern from the input device (230) and the at least one time information for time of receiving the information related to the movement of the input device (230).
Paragraph 12. The method of paragraph 11, wherein the obtaining of the first location information related to the location of an input device (230) comprises: identifying the shape of the optical signal received through the receiver of the distance measurement sensor (341); and obtaining the first location information related to the location of the input device (230), based on the shape of the received optical signal.
Paragraph 13. The method of any of paragraphs 10 to 12, wherein the identifying of the relative location of the second electronic device (220) with respect to the electronic device (210) comprises: comparing at least one time information for time of obtaining the first location information with at least one time information for time of receiving the second location information; estimating at least one of the location or movement of the input device (230), based on the comparison results; and identifying the relative location of the second electronic device (220) with respect to the electronic device (210), based on at least one of the estimated location or movement of the input device (230).
Paragraph 14. The method of any of paragraphs 10 to 13, further comprising: identifying at least one of information on the distance to the second electronic device (220) or depth information, based on the identified relative location of the second electronic device (220); configuring first display properties on the first screen to be displayed on the display (351) and configuring second display properties on the second screen to be displayed on the second display (221) of the second electronic device (220), based on at least one of information on the distance to the second electronic device (220) or depth information; and displaying the first screen on the display 351 based on the configured first display properties, and displaying the second screen on the second display (221) of the second electronic device (220) based on the configured second display properties.
Paragraph 15. The method of paragraph 12, further comprising: receiving information related to the movement of the second electronic device (220) from the second electronic device (220); receiving an optical signal emitted in a second designated pattern from the light-emitting unit of the input device (230) through the receiving unit of the distance measurement sensor (341); obtaining third location information related to the location of the input device (230), based on the received optical signal of the second designated pattern; receiving, from the second electronic device (220), fourth location information related to the location of the input device (230) obtained by the second electronic device (220); identifying the second relative location of the second electronic device (220) with respect to the electronic device (210), based on the third location information and the fourth location information; and reconfiguring arrangement of the display (351) of the electronic device (210) and the second display (221) of the second electronic device (220), based on the second relative location of the second electronic device (220).

## Claims

1. A ring-shaped wearable electronic device (230) comprising:
a housing (510);
a communication circuit (410);
a sensor light-emitting unit (565) disposed in an interior space of the housing (510) to emit an optical signal toward an interior of the housing (510);
a plurality of light-emitting units (1115) exposed to an outside of the housing (510) to emit an optical signal toward the outside of the housing (510);
at least one processor (450) comprising processing circuitry; and
memory (410) storing instructions,
wherein the instructions, when executed individually or collectively by the at least one processor (450), cause the ring-shaped wearable electronic device (230) to:
establish, through the communication circuit (410), a communication connection with a first external electronic device (210) and a second external electronic device (220), and
emit, based on receiving a signal related to an arrangement configuration of a display from the first external electronic device (210), an optical signal of a designated pattern at a specified time interval through at least one of the plurality of light-emitting units (1115).

2. The ring-shaped wearable electronic device (230) of claim 1, wherein the designated pattern includes at least one of a specific pattern, a specific period, or a specific length.

3. The ring-shaped wearable electronic device (230) of claim 1 or 2, wherein the optical signal of the designated pattern emitted at the specified time interval is used by the first external electronic device (210) or the second external electronic device (220) to configure an arrangement of a display (351) of the first external electronic device (210) and a display (221) of the second external electronic device (220), and
wherein the arrangement is configured based on first location information of the ring-shaped wearable electronic device (230) identified based on a time at which the first external electronic device (210) receives the optical signal, and second location information of the ring-shaped wearable electronic device (230) identified based on a time at which the second external electronic device (220) receives the optical signal.

4. The ring-shaped wearable electronic device (230) of any of claims 1 to 3, further comprising a sensor circuit (430),
wherein the instructions, when executed individually or collectively by the at least one processor (450), cause the ring-shaped wearable electronic device (230) to:
based on a detection of a movement of the ring-shaped wearable electronic device (230) through the sensor circuit (430), transmit, through the communication circuit (410), information related to the movement of the ring-shaped wearable electronic device (230) to the first external electronic device (210) and the second external electronic device (220).

5. The ring-shaped wearable electronic device (230) of claim 4, wherein the information related to the movement of the ring-shaped wearable electronic device (230) is used to detect a specific gesture for reconfiguring the arrangement of the display (351) of the first external electronic device (210) and the display (221) of the second external electronic device (220).

6. The ring-shaped wearable electronic device (230) of claim 4 or 5, wherein the information related to the movement of the ring-shaped wearable electronic device (230) is further used by the first external electronic device (210) or the second external electronic device (220) to configure an arrangement of a display (351) of the first external electronic device (210) and a display (221) of the second external electronic device (220).

7. The ring-shaped wearable electronic device (230) of any of claim 4 to 6, wherein the information related to the movement of the ring-shaped wearable electronic device (230) includes at least one of movement speed information, movement direction information, movement distance information, or inclination information.

8. An operation method of a ring-shaped wearable electronic device (230), the method comprising:
establishing, through a communication circuit (410), a communication connection with a first external electronic device (210) and a second external electronic device (220), and
emitting, based on receiving a signal related to an arrangement configuration of a display from the first external electronic device (210), an optical signal of a designated pattern to an outside of a housing (510) at a specified time interval through at least one of the plurality of light-emitting units (1115) exposed to the outside of the housing (510).

9. The method of claim 8, wherein the designated pattern includes at least one of a specific pattern, a specific period, or a specific length.

10. The method of claim 8 or 9, wherein the optical signal of the designated pattern emitted at the specified time interval is used by the first external electronic device (210) to configure an arrangement of a display (351) of the first external electronic device (210) and a display (221) of the second external electronic device (220), and
wherein the arrangement is configured based on first location information of the ring-shaped wearable electronic device (230) identified based on a time at which the first external electronic device (210) receives the optical signal, and second location information of the ring-shaped wearable electronic device (230) identified based on a time at which the second external electronic device (220) receives the optical signal.

11. The method of any of claims 8 to 10, further comprising:
based on a detection of a movement of the ring-shaped wearable electronic device (230) through a sensor circuit (430), transmitting, through the communication circuit (410), information related to the movement of the ring-shaped wearable electronic device (230) to the first external electronic device (210) and the second external electronic device (220).

12. The method of claim 11, wherein the information related to the movement of the ring-shaped wearable electronic device (230) is used to detect a specific gesture for reconfiguring the arrangement of the display (351) of the first external electronic device (210) and the display (221) of the second external electronic device (220).

13. The method of claim 11 or 12, wherein the information related to the movement of the ring-shaped wearable electronic device (230) is further used by the first external electronic device (210) to configure an arrangement of a display (351) of the first external electronic device (210) and a display (221) of the second external electronic device (220).

14. The method of any of claim 11 to 13, wherein the information related to the movement of the ring-shaped wearable electronic device (230) includes at least one of movement speed information, movement direction information, movement distance information, or inclination information.
